(19) Europäisches Patentamt
European Patent Office
Office européen des brevets

(11) **EP 4 723 783 A1**

(12) **EUROPEAN PATENT APPLICATION**
published in accordance with Art. 153(4) EPC

(43) Date of publication:
**08.04.2026  Bulletin 2026/15**

(21) Application number: **23947117.0**

(22) Date of filing: **02.08.2023**

(51) International Patent Classification (IPC):
**H04W 72/40** (2023.01)

(52) Cooperative Patent Classification (CPC):
**H04W 72/40**

(86) International application number:
**PCT/CN2023/110771**

(87) International publication number:
**WO 2025/025169 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
- ZHAO, Zhenshan
  **Dongguan, Guangdong 523860 (CN)**
- DING, Yi
  **Dongguan, Guangdong 523860 (CN)**

(74) Representative: **RGTH
Patentanwälte PartGmbB
Neuer Wall 10
20354 Hamburg (DE)**

(54) **SIDELINK COMMUNICATION METHOD AND TERMINAL DEVICE**

(57)    Provided are a sidelink communication method and a terminal device. The method comprises: if a first condition is satisfied, a terminal device adjusting transmission power of a sidelink transmission, wherein the first condition comprises one or more of the following: one or more sidelink transmissions of the terminal device on a first carrier overlapping in the time domain with one or more sidelink transmissions of the terminal device on a second carrier; and the sum of transmission power of a plurality of sidelink transmissions in a time-domain overlapping portion of the first carrier and the second carrier being greater than a first transmission power. On the basis of the present application, during multi-carrier sidelink communication, a terminal device can perform power control on the basis of the first condition, so as to avoid problems such as abnormal transmission power of multiple carriers in a sidelink transmission process, thereby avoiding abnormalities in multi-carrier sidelink communication.

Adjust, by a terminal device, a transmit power of a sidelink transmission when a first condition is met — S1010

FIG. 10

EP 4 723 783 A1

**Description**

**TECHNICAL FIELD**

This application relates to the field of communications technologies, and more specifically, to a sidelink communication method and a terminal device.

**BACKGROUND**

The sidelink system may support sidelink transmission using multiple carriers, thereby improving a system transmission rate or improving transmission reliability. During sidelink transmission, the terminal device may perform carrier selection. For example, the terminal device may determine, according to a correspondence between a service type and a carrier configured by an upper layer, a carrier corresponding to the to-be-transmitted data. In the sidelink multi-carrier technology, technologies supported by the terminal device may include one or more of carrier aggregation (carrier aggregation), packet duplication (packet duplication), or the like. How to implement power control in the sidelink multi-carrier technology is an urgent problem to be solved.

**SUMMARY**

This application provides a sidelink communication method and a terminal device. The following describes some aspects related to this application.

According to a first aspect, a sidelink communication method is provided, where the method includes: adjusting, by a terminal device, a transmission power of a sidelink transmission when a first condition is met; wherein the first condition comprises one or more of following: one or more sidelink transmissions of the terminal device on a first carrier overlap in time domain with one or more sidelink transmissions of the terminal device on a second carrier; or a sum of transmission power of a plurality of sidelink transmissions in a time domain overlapping part of the first carrier and the second carrier is greater than a first transmission power.

According to a second aspect, a terminal device is provided, where the terminal device includes an adjustment unit, configured to adjust a transmission power of a sidelink transmission when a first condition is met; wherein the first condition comprises one or more of following: one or more sidelink transmissions of the terminal device on a first carrier overlap in time domain with one or more sidelink transmissions of the terminal device on a second carrier; or a sum of transmission power of a plurality of sidelink transmissions in a time domain overlapping part of the first carrier and the second carrier is greater than a first transmission power.

According to a third aspect, a terminal device is provided, including a processor and a memory, where the memory is configured to store one or more computer programs, and the processor is configured to invoke the computer program in the memory so that the terminal device performs some or all of the steps in the method in the first aspect.

According to a fourth aspect, an embodiment of this application provides a communications system, where the system includes the foregoing terminal device. In another possible design, the system may further include another device that interacts with the terminal device in the solution provided in embodiments of this application.

According to a fifth aspect, an embodiment of this application provides a computer-readable storage medium. The computer-readable storage medium stores a computer program, and the computer program causes a terminal device to perform some or all of the steps of the methods according to the foregoing aspects.

According to a sixth aspect, an embodiment of this application provides a computer program product. The computer program product includes a non-transitory computer-readable storage medium that stores a computer program, and the computer program is operable to cause a terminal device to perform some or all of the steps of the methods according to the foregoing aspects. In some implementations, the computer program product may be a software installation package.

According to a seventh aspect, an embodiment of this application provides a chip. The chip includes a memory and a processor, and the processor may invoke and run a computer program in the memory, to implement some or all of the steps of the methods according to the foregoing aspects.

Based on this application, in a multi-carrier sidelink communication process, the terminal device may perform power control based on a first condition, so as to avoid a problem of abnormal transmission power of multiple carriers in a sidelink transmission process, and further avoid an abnormal multi-carrier sidelink communication.

**BRIEF DESCRIPTION OF THE DRAWINGS**

FIG. 1 is an example diagram of a system architecture of a wireless communications system to which embodiments of this application are applicable.

FIG. 2 is an example of a scenario of sidelink communication within network coverage.

FIG. 3 is an example diagram of a scenario of sidelink communication partially within network coverage.

FIG. 4 is an example of a scenario of sidelink communication outside network coverage.

FIG. 5 is an example diagram of a scenario of sidelink communication based on a central control node.

FIG. 6 is an example diagram of a broadcast-based sidelink communication manner.

FIG. 7 is an example diagram of a unicast-based sidelink communication manner.

FIG. 8 is an example diagram of a multicast-based sidelink communication manner.

FIG. 9A is an example diagram of a timeslot structure used by a sidelink communications system.

FIG. 9B is another example of a timeslot structure used by a sidelink communications system.

FIG. 10 is a schematic flowchart of a sidelink communication method according to an embodiment of this application.

FIG. 11 is an example diagram of a scenario applicable to an embodiment of this application.

FIG. 12 is an example diagram of another scenario applicable to an embodiment of this application.

FIG. 13 is an example diagram of another scenario applicable to an embodiment of this application.

FIG. 14 is an example diagram of another scenario applicable to an embodiment of this application.

FIG. 15 is an example diagram of another scenario applicable to an embodiment of this application.

FIG. 16 is an example diagram of another scenario applicable to an embodiment of this application.

FIG. 17 is a schematic structural diagram of a terminal device according to an embodiment of this application.

FIG. 18 is a schematic structural diagram of a communication apparatus according to an embodiment of this application.

## DETAILED DESCRIPTION OF THE EMBODIMENTS

Technical solutions in this application are described below with reference to the accompanying drawings.

### Communications system architecture

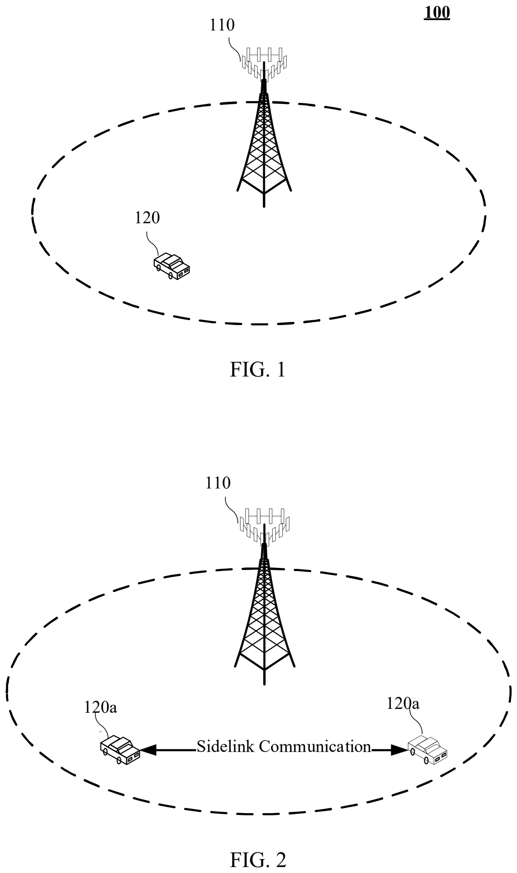

FIG. 1 is an example of a system architecture of a wireless communications system 100 that may be applied to an embodiment of this application. The wireless communications system 100 may include a network device 110 and a terminal device 120. The network device 110 may be a device that communicates with the terminal device 120. The network device 110 may provide communication coverage for a specific geographical area, and may communicate with the terminal device 120 located in the coverage area.

FIG. 1 exemplarily shows one network device and one terminal device. Optionally, the wireless communications system 100 may include one or more network devices 110 and/or one or more terminal devices 120. For a network device 110, the one or more terminal devices 120 may be located within network coverage of the network device 110, or may be located outside network coverage of the network device 110, or may be partially located in the network device 110 and partially located outside of network coverage of the network device 110. This is not limited in this embodiment of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station. Optionally, a terminal device may be used as a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

## Sidelink communication with different network coverage

Sidelink communication refers to a communications technology based on a sidelink (sidelink, SL, also referred to as a direct-link). The sidelink communication may be, for example, device-to-device (device to device, D2D) or vehicle to everything (vehicle to everything, V2X) communication. In a conventional cellular system, communication data is received or sent between a terminal device and a network device, and sidelink communication supports direct transmission of communication data between terminal devices. Compared with conventional cellular communication, direct transmission of communication data between the terminal devices may have higher spectrum efficiency and lower transmission delay. For example, a sidelink communications technology is used in a vehicle network system.

The sidelink communication may be classified into sidelink communication within network coverage, sidelink communication in partial network coverage, and sidelink communication outside network coverage according to network coverage of the terminal device.

FIG. 2 is an example of a scenario of sidelink communication within network coverage. In the scenario shown in FIG. 2, both the two terminal devices 120a are within coverage of the network device 110. Therefore, both the two terminal devices 120a may receive configuration signaling of the network device 110 (configuration signaling in this application may also be replaced with configuration information), and determine a sidelink configuration according to the configuration signaling of the network device 110. After sidelink configuration is performed on both the two terminal devices 120a, sidelink communication may be performed on the sidelink.

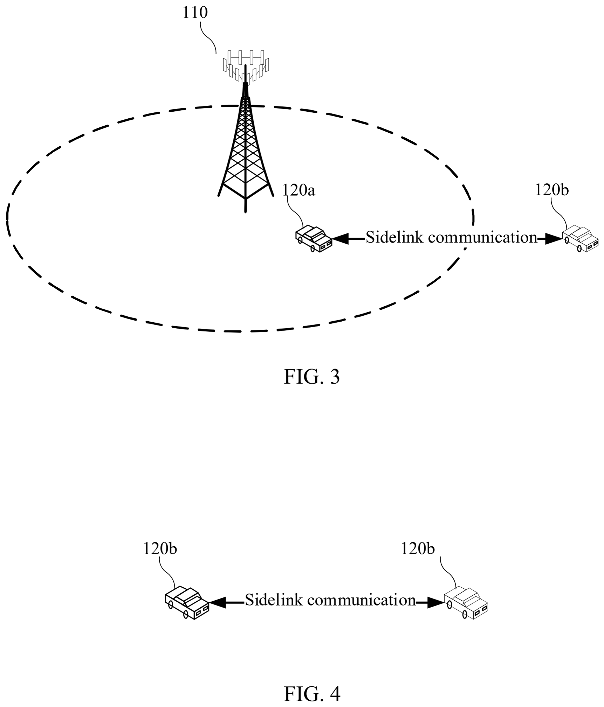

FIG. 3 is an example diagram of a scenario of sidelink communication in partial network coverage. In the scenario shown in FIG. 3, the terminal device 120a performs sidelink communication with the terminal device 120b. The terminal device 120a is located in a coverage area of the network device 110. Therefore, the terminal device 120a can receive configuration signaling of the network device 110, and determine a sidelink configuration according to the configuration signaling of the network device 110. The terminal device 120b is located outside the network coverage area and cannot receive the configuration signaling of the network device 110. In this case, the terminal device 120b may determine the sidelink configuration according to pre-configuration (pre-configuration) information and/or information carried in a physical sidelink broadcast channel (physical sidelink broadcast channel, PSBCH) sent by the terminal device 120a in the network coverage area. After sidelink configuration is performed on both the terminal device 120a and the terminal device 120b, sidelink communication may be performed on the sidelink.

FIG. 4 is an example of a scenario of sidelink communication outside network coverage. In the scenario shown in FIG. 4, both the two terminal devices 120b are located outside a network coverage area. In this case, both the two terminal devices 120b may determine a sidelink configuration according to pre-configuration information. After sidelink configuration is performed on both the two terminal devices 120b, sidelink communication may be performed on the sidelink.

## Sidelink communication based on the central control node

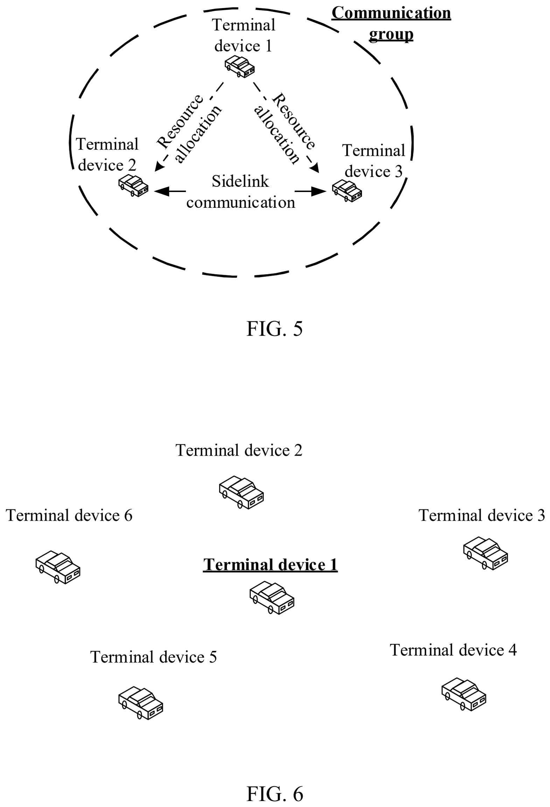

FIG. 5 is an example diagram of a scenario of sidelink communication based on a central control node. In the sidelink communication scenario, multiple terminal devices may form a communication group, and the communication group has a central control node. The central control node may be a terminal device (for example, a terminal device 1 in FIG. 5) in a communications group, and the terminal device may also be referred to as a cluster header (cluster header, CH) terminal device. The central control node may be responsible for completing one or more of the following functions: establishing a communications group, adding and deleting members of the communications group, performing resource coordination in the communications group, allocating a sidelink transmission resource to another terminal device, receiving sidelink feedback information of another terminal device, and performing resource coordination with another communications group.

## Mode of sidelink communication

Some standards or protocols (e.g., 3rd generation partnership project (3GPP)) define two modes of sidelink communication: a first mode and a second mode.

In the first mode, a resource (the resource mentioned in this application may also be referred to as a transmission resource, such as a time frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario covered by a network device, for example, the foregoing scenario shown in FIG. 2. In the scenario shown in FIG. 2, the terminal device 120a is located within network coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission by using the selected resource. For example, in the scenario shown in FIG. 4, the terminal device 120b is outside a cell coverage area. Therefore, the terminal device 120b may independently select a resource from a preconfigured resource pool for sidelink transmission. Alternatively, in the scenario shown in FIG. 2, the terminal device 120a may also independently select one or more resources from a resource pool configured by the network device 110 for sidelink transmission.

## Data transmission modes of sidelink communication

Some sidelink communications systems (e.g., long term evolution vehicle to everything (LTE-V2X)) support broadcast-based data transmission (hereinafter referred to as broadcast transmission). For broadcast transmission, the receive end terminal may be any terminal device around the transmit end terminal. FIG. 6 is used as an example. The terminal device 1 is a transmit end terminal, and a receive end terminal corresponding to the transmit end terminal is any terminal device around the terminal device 1, for example, may be a terminal device 2 to a terminal device 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, the new radio vehicle to everything (NR-V2X) system expects to support self-driving. Self-driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, unicast transmission and multicast transmission are introduced in NR-V2X.

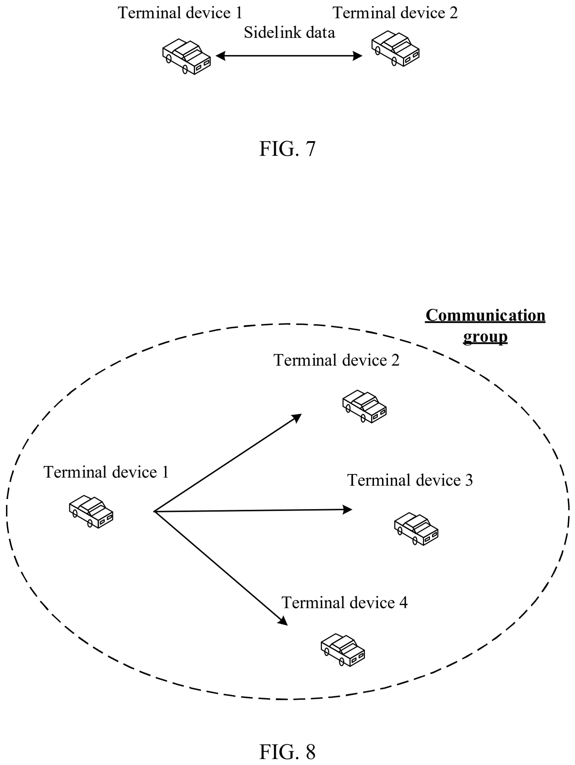

For unicast transmission, a receive end terminal generally is only one terminal device. FIG. 7 is used as an example. Unicast transmission is performed between the terminal device 1 and the terminal device 2. The terminal device 1 may be a transmit end terminal, the terminal device 2 may be a receive end terminal, or the terminal device 1 may be a receive end terminal, and the terminal device 2 may be a transmit end terminal.

For multicast transmission, the receive end terminal may be terminal devices in a communications group, or the receive end terminal may be terminal devices within a specific transmission distance. FIG. 8 is used as an example. The terminal device 1, the terminal device 2, the terminal device 3, and the terminal device 4 form a communications group. If the terminal device 1 sends data, all other terminal devices (the terminal device 2 to the terminal device 4) in the group may be receive end terminals.

## Timeslot structure of sidelink communication

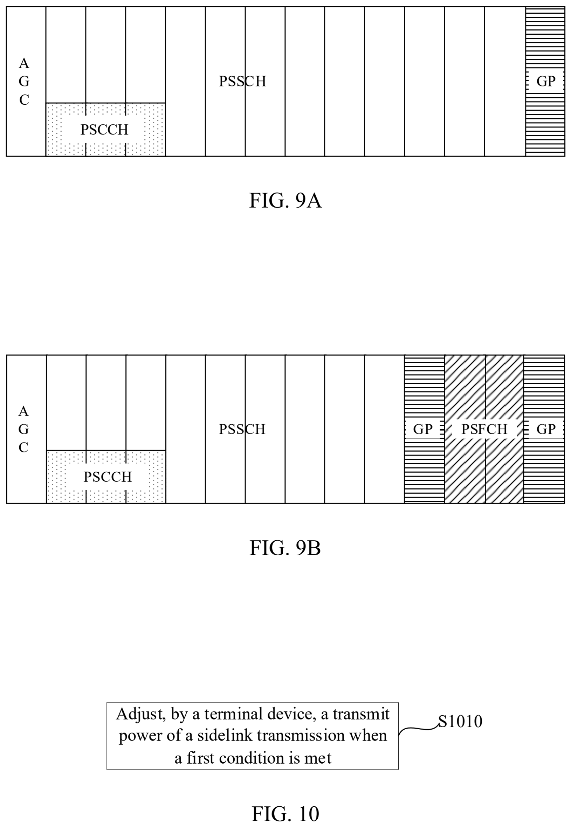

The communications system may define a frame, a subframe, or a timeslot structure of sidelink communication. Some sidelink communication systems define multiple timeslot structures. For example, a NR-based sidelink communication system (NR SL) defines two timeslot structures. One of the two timeslot structures does not include a physical sidelink feedback channel (physical sidelink feedback channel, PSFCH), referring to FIG. 9A, and the other timeslot structure in the two timeslot structures includes a PSFCH, referring to FIG. 9B.

A physical sidelink control channel (physical sidelink control channel, PSCCH) in the NR SL may start from the $2^{nd}$ sidelink symbol of a timeslot in time domain, and the PSCCH may occupy two or three symbols in the time domain (any symbol herein may refer to an orthogonal frequency division multiplexing (orthogonal frequency division multiplexing, OFDM) symbol). The PSCCH may occupy multiple PRBs in frequency domain. For example, the number of PRBs occupied by the PSCCH may be selected from the following values: {10, 12 15, 20, 25}.

To reduce complexity of performing blind detection on the PSCCH by the terminal device, generally, only one symbol quantity and one PRB quantity are configured for the PSCCH in a resource pool. In addition, because the NR SL uses a sub-channel (sub-channel) as a minimum granularity of resource allocation of a physical sidelink shared channel (physical sidelink shared channel, PSSCH), a quantity of PRBs occupied by the PSCCH must be less than or equal to a quantity of PRBs included in a sub-channel in a resource pool.

Referring to FIG. 9A, for a timeslot structure that does not include the PSFCH, the PSSCH in the NR SL may start from the $2^{nd}$ sidelink symbol of the timeslot in the time domain. The last sidelink symbol in the timeslot is used as a guard period (guard period, GP), and the remaining symbols may be mapped to PSSCH. The first sidelink symbol in the timeslot may be a repetition of the second sidelink symbol. Generally, as a receive end, the terminal device uses the first sidelink symbol as a symbol for performing automatic gain control (automatic gain control, AGC). Thus, data on the first sidelink symbol is not usually used for data demodulation. The PSSCH may occupy K subchannels in a frequency domain, and each subchannel may include P consecutive PRBs (values of K and P may be predefined in a protocol, preconfigured, configured by a network device, or may depend on implementation of a terminal device).

FIG. 9B shows a timeslot structure including a PSFCH. FIG. 9B shows symbols occupied by PSFCH, PSCCH, and PSSCH in a timeslot. The main difference between this slot structure and that in FIG. 9A is that the last but one symbol and the last but two symbol in the slot are used to transmit the PSFCH, and in addition, a symbol before the symbol used to transmit the PSFCH is also used as the GP. It can be learned from the timeslot structure shown in FIG. 9B that, in a timeslot, the last symbol is used as a GP, the last but one symbol is used for PSFCH transmission, and data on the last but two symbol is the same as data on the last but one symbol that is used for PSFCH transmission. Generally, the last but two symbol is used as an AGC symbol, and the last but three symbol has the same function as the last symbol, both are used as a GP. In addition, the first symbol in a timeslot is usually used as an AGC adjustment, data on the symbol is the same as data on the second symbol in the timeslot, PSCCH occupies three symbols, and remaining symbols can be used for PSSCH transmission.

## Sidelink power control

The NR SL system supports open-loop control on transmission power of PSSCH, PSCCH, PSFCH, and sidelink synchronization signal block (sidelink synchronization signal block, S-SSB). For transmission of PSSCH and PSCCH in a unicast scenario, three power control manners may be supported: power control based on a downlink path loss only, power control based on a sidelink path loss only, and power control based on a downlink path loss and a sidelink path loss. Which power control mode to be used for the PSSCH and PSCCH depends on the upper layer (RRC layer) configuration. For example, if only a basic working point $P_{0,SL}$ for performing power control based on a sidelink path loss is configured by the upper layer, it indicates that power control is performed based on the sidelink path loss only; if only a basic working point $P_{0,D}$ for performing power control based on a downlink path loss is configured by the upper layer, it indicates that power control is performed based on the sidelink path loss only; and if $P_{0,SL}$ and $P_{0,D}$ are configured by the upper layer, it indicates that the power control is based on the downlink path loss and sidelink path loss.

For transmission of the PSFCH and the S-SSB, and transmission of the PSSCH and the PSCCH in the multicast and broadcast scenarios, because the terminal device serving as the transmit end does not obtain the sidelink path loss information, only the open-loop power control based on the downlink path loss is supported.

**PSSCH/PSCCH power control**

Transmission power of the PSSCH on a symbol that includes only the PSSCH may be determined in the following manner.

If the terminal device works in the foregoing second mode (or referred to as Mode 2), when congestion control is configured at the upper layer, PSSCH transmission power meets the following formula:

$$P_{PSSCH} = \min(P_{CMAX}, P_{MAX\_CBR}, \min(P_{PSSCH,D}, P_{PSSCH,SL}))[\text{dBm}];$$

Otherwise, the PSSCH transmission power meets the following formula:

$$P_{PSSCH} = \min(P_{CMAX}, \min(P_{PSSCH,D}, P_{PSSCH,SL})) \ [\text{dBm}]$$

In the foregoing formula, $P_{CMAX}$ represents a configured maximum transmission power, $P_{MAX\_CBR}$ represents a maximum sidelink transmission power determined based on a transmission priority and a channel busy ratio (channel busy ratio, CBR) level under congestion control configured by the upper layer, $P_{PSSCH,D}$ and $P_{PSSCH,SL}$ respectively represents a transmission power determined based on a downlink path loss and a transmission power determined based on a sidelink path loss.

$P_{PSSCH,D}$ and $P_{PSSCH,SL}$ are respectively determined by using the following formula:

$$P_{\text{PSSCH},D}(i) = P_{0,D} + 10\log_{10}(2^{\mu} \cdot M_{RB}^{PSSCH}) + \alpha_D \cdot PL_D \ [\text{dBm}]$$

$$P_{\text{PSSCH},SL}(i) = P_{0,SL} + 10\log_{10}(2^{\mu} \cdot M_{RB}^{PSSCH}) + \alpha_{SL} \cdot PL_{SL} \ [\text{dBm}]$$

In the foregoing formula, $P_{0,D}/P_{0,SL}$ respectively represent transmission power basic operating points of power control based on downlink/sidelink path loss that are configured by the upper layer. $\alpha_D/\alpha_{SL}$ indicates the downlink/sidelink path loss compensation factor configured by the upper layer. If the upper layer does not configure $\alpha_D/\alpha_{SL}$, the value of $\alpha_D/\alpha_{SL}$ may be 1. $L_D/PL_{SL}$ indicates a downlink/sidelink path loss estimated by the terminal device, and $PM_{RB}^{PSSCH}$ indicates a quantity of PRBs occupied by the PSSCH on a symbol that does not carry the PSCCH.

It should be noted that if the upper layer configures only $P_{0,D}$ but does not configure $P_{0,SL}$, power control is performed based on the downlink path loss only. In this case, $\min(P_{PSSCH,D}, P_{PSSCH,SL}) = P_{PSSCH,D}$. If the upper layer configures only $P_{0,SL}$ but does not configure $P_{0,D}$, it indicates that the power control is based only on the sidelink path loss. In this case, $\min(P_{PSSCH,D}, P_{PSSCH,SL}) = P_{PSSCH,SL}$. If the upper layer configures $P_{0,SL}$ and $P_{0,D}$, it indicates that power control is performed based on both the downlink path loss and the sidelink path loss.

For a symbol that includes both the PSCCH and the PSSCH, the terminal device may allocate the total transmission power $P_{PSSCH}$ to the PSCCH and the PSSCH according to the PRB quantity ratio of the PSCCH and the PSSCH.

For example, the transmission power $P_{PSSCH2}$ of the PSSCH meets the following requirements:

$$P_{PSSCH2} = 10\log_{10}(\frac{M_{RB}^{PSSCH} - M_{RB}^{PSCCH}}{M_{RB}^{PSSCH}}) + P_{PSSCH}[\text{dBm}]$$

In the foregoing formula, $M_{RB}^{PSCCH}$ indicates the quantity of PRBs occupied by the PSCCH.

Correspondingly, the transmission power of the PSCCH meets the following requirements:

$$P_{PSCCH} = 10\log_{10}\left(\frac{M_{RB}^{PSCCH}}{M_{RB}^{PSSCH}}\right) + P_{PSSCH}[\text{dBm}]$$

## PSFCH transmission power

The NR SL system supports the power control of the PSFCH based on the downlink path loss, and does not support the power control of the PSFCH based on the sidelink path loss. In the NR SL system, the terminal device can send multiple PSFCH on one symbol, and a maximum transmission power of the terminal device may be evenly split between the multiple PSFCH. In addition, in the NR SL system, a maximum quantity of simultaneous PSFCH transmissions allowed by the terminal device does not exceed a maximum quantity of PSFCH transmissions $N_{\text{max},PSFCH}$ configured by the upper layer. The terminal device may determine a quantity of to-be-transmitted PSFCHs $N_{\text{sch,Tx},PSFCH}$ according to a quantity of PSCCHs/PSSCHs that are received in multiple PSSCH timeslots corresponding to the PSFCH timeslot and that require sidelink feedback. Further, the terminal device may determine, according to $N_{\text{max},PSFCH}$ and $N_{\text{sch,Tx},PSFCH}$, a quantity of PSFCHs $N_{\text{Tx},PSFCH}$ that need to be simultaneously transmitted, and determine a transmission power of each PSFCH.

An overall principle of determining, by the terminal device, transmission power of each PSFCH and a quantity $N_{\text{Tx},PSFCH}$ of PSFCHs actually sent by the terminal device is as follows: transmission power of each PSFCH is the same and does not exceed $P_{PSFCH,one}$, and a total transmission power of $N_{\text{Tx},PSFCH}$ PSFCHs does not exceed a configured maximum transmission power $P_{\text{CMAX}}$. If the total transmission power of the $N_{\text{Tx},PSFCH}$ PSFCHs exceeds the total transmission power $P_{\text{CMAX}}$, the terminal device re-determines the quantity of to-be-transmitted PSFCHs according to the PSFCH priority. However, a quantity of to-be-transmitted PSFCHs determined by the terminal device is not less than a lower limit value, so that transmission power of each PSFCH is less than or equal to $P_{PSFCH,one}$.

The following formula may be used to determine $P_{PSFCH,one}$ :

$$P_{PSFCH,one} = P_{\text{O\_PSFCH}} + 10\log_{10}(2^u) + \alpha_{PSFCH} \cdot PL_D[\text{dBm}]$$

In the foregoing formula, $P_{\text{O\_PSFCH}}$ indicates a basic working point of PSFCH transmission power of power control based on downlink path loss configured by the upper layer. $\alpha_{PSFCH}$ indicates the downlink path loss compensation factor of the PSFCH power control that is configured by upper layer signaling. If the upper layer does not configure $\alpha_{PSFCH}$, the value of $\alpha_{PSFCH}$ can be 1. $PL_D$ indicates the downlink path loss estimated by the terminal device.

## S-SSB transmission power

The S-SSB may include three signals: a sidelink secondary synchronization signal (sidelink secondary synchronizaiton signal, S-SSS), a sidelink primary synchronization signal (sidelink primary synchronizaiton signal, S-PSS), and a physical sidelink broadcast channel (physical sidelink broadcast channel, PSBCH). Transmission power on a time domain symbol corresponding to the three signals is generally consistent, so as to avoid an AGC problem. The S-SSB can perform power control based on the downlink path loss. When the S-SSB performs power control based on the downlink path loss, the transmission power of the S-SSB meets the following formula:

$$P_{S-SSB} = \min(P_{\text{CMAX}}, P_{0,\text{S-SSB}} + 10\log_{10}(2^u \cdot M_{RB}^{\text{S-SSB}}) + \alpha_{\text{S-SSB}} \cdot PL_D)[\text{dBm}]$$

In the foregoing formula, $P_{\text{CMAX}}$ represents a configured maximum transmission power, and $P_{0,\text{S-SSB}}$ represents a basic working point of a transmission power that is configured by the upper layer for power control based on a downlink path loss. $\alpha_{\text{S-SSB}}$ indicates the downlink path loss compensation factor configured by the upper layer signaling. If the upper layer signaling does not configure $\alpha_{\text{S-SSB}}$, the value of $\alpha_{\text{S-SSB}}$ can be 1. $PL_D$ indicates the downlink path loss estimated by the terminal device. $M_{RB}^{\text{S-SSB}}$ indicates the number of PRBs occupied by the S-SSB. The value of $M_{RB}^{\text{S-SSB}}$ is usually 11. If the parameter $P_{0,\text{S-SSB}}$ is not configured by the upper layer or the terminal device is located outside cell coverage, the terminal device may send the S-SSB at a maximum transmission power $P_{\text{CMAX}}$.

The sidelink system may support sidelink transmission by using multiple carriers, thereby improving a system transmission rate or improving transmission reliability. During sidelink transmission, the terminal device may perform carrier selection. For example, the terminal device may determine, according to a correspondence configured by the upper layer between a service type and a carrier, a carrier corresponding to the to-be-transmitted data. In the sidelink multi-carrier technology, technologies that may be supported by the terminal device may include one or more of carrier aggregation, data packet repetition, or the like. How to implement power control in a sidelink multi-carrier technology is an urgent technical problem to be solved.

FIG. 10 is a schematic flowchart of a sidelink communication method according to an embodiment of this application. The method shown in FIG. 10 may be implemented by a terminal device. The method shown in FIG. 10 may include step S1010.

Step S1010: If a first condition is met, the terminal device adjusts transmission power of sidelink transmission.

The first condition in step S1010 is related to a first carrier and a second carrier. Therefore, the following first describes the first carrier and the second carrier.

The terminal device may perform multi-carrier sidelink transmission by using the first carrier and the second carrier. The second carrier may include one or more carriers. In a case in which the second carrier includes one carrier, the terminal device may perform two-carrier sidelink transmission by using the first carrier and another carrier that is different from the first carrier. In a case in which the second carrier includes multiple carriers, the terminal device may perform, by using the first carrier and the multiple carriers, multi-carrier sidelink transmission using more than two carriers.

Configurations of the first carrier and the second carrier may be the same or different. The configuration may include, for example, one or more of the following: a sub-carrier spacing (sub-carrier spacing, SCS), a timeslot structure, or the like.

For a subcarrier spacing, in some communications systems (for example, an NR SL system), one carrier supports only one bandwidth part (bandwidth part, BWP). The subcarrier spacing can be configured by using the BWP. Therefore, one carrier supports only one subcarrier spacing size. When the sidelink system supports multi-carrier transmission, different carriers may correspond to a same subcarrier spacing size or different subcarrier spacing sizes. The subcarrier spacing size may include: 15kHz, 30kHz, 60kHz, 120kHz, and the like. For example, a subcarrier spacing of the first carrier may be 15kHz, and a subcarrier spacing of one carrier of the second carrier may be 30kHz.

For a timeslot structure, each carrier may be configured with a PSSCH transmission resource and/or a PSFCH transmission resource by using a resource pool, so that different carriers correspond to different timeslot structures. For example, a timeslot structure corresponding to the first carrier may be as shown in FIG. 9A, and a timeslot structure corresponding to the second carrier may be as shown in FIG. 9B.

It should be noted that when the second carrier includes multiple carriers, configurations of the first carrier and the second carrier being different may include: the first carrier has a configuration different from some or all of carries in the second carrier. If multiple carriers in the second carrier have configurations different from that of the first carrier, configurations of the multiple carriers in the second carrier may be the same to each other or different from each other. For example, the subcarrier spacing of the first carrier is the same as subcarrier spacings of a part of carriers in the second carrier, but is different from subcarrier spacings of another part of carriers the second carrier. Alternatively, the subcarrier spacing of the first carrier is different from the subcarrier spacings of all carriers in the second carrier.

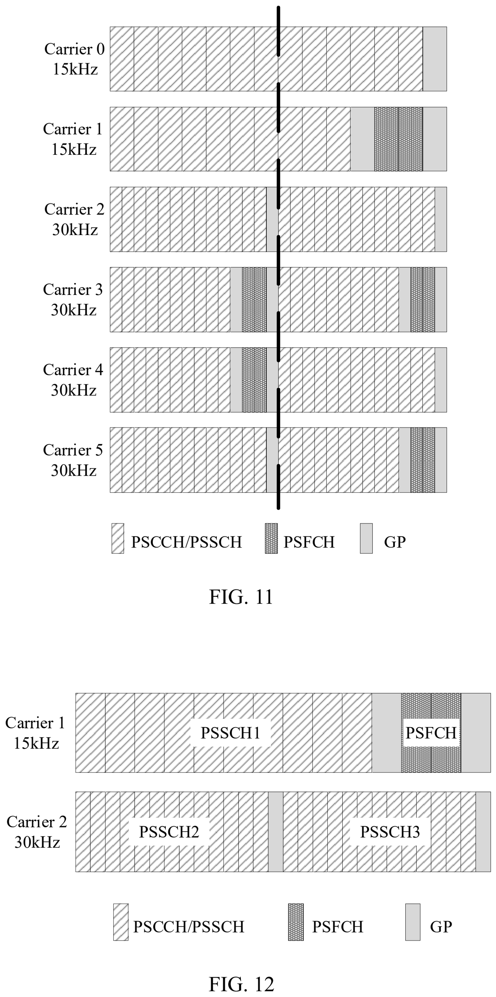

The following describes the first carrier and the second carrier by using an example in FIG. 11. FIG. 11 shows six carriers. Both the carrier 0 and the carrier 1 are corresponding to 15kHz subcarrier spacing, and all the carrier 2, the carrier 3, the carrier 4, and the carrier 5 are corresponding to 30kHz subcarrier spacing. FIG. 11 shows one timeslot of the carrier 0 and one timeslot of the carrier 1, duration of which corresponds to duration of two timeslots of the carrier 2, the carrier 3, the carrier 4, and the carrier 5.

In FIG. 11, the first carrier may be any one of six carriers, and the second carrier may include some or all of the five carriers except the first carrier. For example, the first carrier may be the carrier 0. The second carrier may be any carrier in the carriers 1 to 5. Alternatively, the second carrier may include any two carriers in the carriers 1 to 5. Alternatively, the second carrier may include any three carriers in the carrier 1 to 5. Alternatively, the second carrier may include any four carriers in the carriers 1 to 5. Alternatively, the second carrier may include all of the carriers 1 to 5.

FIG. 11 is still used as an example. In a case in which the first carrier includes the carrier 0, and the second carrier includes the carrier 1 and the carrier 2, although subcarrier spacings of the carrier 0 and the carrier 1 are the same, subcarrier spacings of the carrier 0 and the carrier 2 are different, and therefore, subcarrier spacings of the first carrier and the second carrier are different.

The terminal device may perform one or more sidelink transmissions on both the first carrier and the second carrier. The sidelink transmission may include transmission of a sidelink channel and/or a sidelink signal. The sidelink channel and/or the sidelink signal may include, for example, one or more of PSSCH, PSCCH, PSFCH, or S-SSB. One sidelink transmission may correspond to one sidelink transmission opportunity. One or more sidelink channels and/or sidelink signals may be transmitted in one sidelink transmission opportunity. For example, a single PSFCH transmission opportunity may transmit multiple PSFCHs.

The example in FIG. 11 is still used for description. In a PSFCH transmission opportunity of the carrier 1, the terminal device needs to simultaneously transmit four PSFCHs (the quantity of PSFCHs is not shown in the figure). In the PSFCH transmission opportunity in the first timeslot of the carrier 3, the terminal device needs to transmit two PSFCHs. In the PSFCH transmission opportunity in the second timeslot of the carrier 3, the terminal device needs to transmit eight PSFCHs.

It should be noted that, in a case in which the second carrier includes multiple carriers, one or more sidelink transmissions on the second carrier may be on a same carrier, or may be on different carriers.

Still referring to FIG. 11, for example, if the first carrier is the carrier 0, sidelink transmission on the first carrier may include PSSCH transmission. If the second carrier is the carrier 1, one or more transmissions on the second carrier may include PSSCH transmission and PSFCH transmission on the carrier 1. For another example, if the first carrier is the carrier 0, transmission on the first carrier may include PSSCH transmission. If the second carrier includes the carrier 2 and the carrier 3, one or more transmissions on the second carrier may include PSSCH transmission in the first timeslot on the carrier 2, and PSFCH transmission and PSSCH transmission in the first timeslot on the carrier 3.

In some embodiments, the first condition may include one or more of the following: one or more sidelink transmissions of the terminal device on the first carrier overlap with one or more sidelink transmissions of the terminal device on the second carrier in a time domain; or a sum of transmission power of multiple sidelink transmissions overlapping in the time domain between the first carrier and the second carrier is greater than (or exceeds) a first transmission power.

For ease of description, time domain resources corresponding to one or more sidelink transmissions on the first carrier are represented by a first resource. A time domain resource corresponding to one or more sidelink transmissions on the second carrier is represented by a second resource.

That one or more sidelink transmissions of the terminal device on the first carrier overlap one or more sidelink transmissions of the terminal device on the second carrier in a time domain may refer to that at a same moment, one or more transmissions on the first carrier and one or more transmissions on the second carrier overlap in a time domain. That is, overlapping may refer to overlapping of the first resource and the second resource in a time domain.

It should be noted that the overlapping described in this specification may include complete overlapping or partial overlapping, that is, the first resource and the second resource may completely overlap or may partially overlap. That the first resource and the second resource completely overlap may refer to that the first resource and the second resource have exactly the same start location and time domain resource length. Partial overlapping of the first resource and the second resource may refer to that the first resource and the second resource have overlapping time domain resources, but one or more of the following items of the first resource and the second resource are different: a start location or a time domain resource length.

It should be noted that types of sidelink transmissions overlapping in time domain may be the same or may be different. For example, in a time domain overlapping part, a type of sidelink transmission on the first carrier may be PSFCH, and a type of sidelink transmission on the second carrier may be PSSCH/PSCCH.

Still using FIG. 11 as an example to describe the complete or partial overlapping of time domain resources for sidelink transmissions. As shown in FIG. 11, a PSSCH resource on a carrier 0 partially overlaps a PSSCH resource and a PSFCH resource on a carrier 1. A PSSCH resource on the carrier 0 partially overlaps a PSSCH resource in the first timeslot of the carrier 2. A PSSCH resource on the carrier 0 partially overlaps a PSSCH resource in the second timeslot of the carrier 2. The PSSCH resource in the first timeslot of the carrier 3 completely overlaps the PSSCH resource in the first timeslot of the carrier 4. The PSFCH resource in the first timeslot of the carrier 3 completely overlaps the PSFCH resource in the first timeslot of the carrier 4. A PSFCH resource on the carrier 1 partially overlaps a PSSCH time domain resource in the second timeslot of the carrier 2. A PSFCH resource on the carrier 1 partially overlaps a PSFCH time domain resource in the second timeslot of the carrier 3.

Optionally, that one or more sidelink transmissions on the first carrier and one or more sidelink transmissions on the second carrier overlap in a time domain may refer to that one or more sidelink transmissions on the first carrier and one or more sidelink transmissions on the second carrier overlap in a time domain resource in a first time range.

The first time range may include one or more of the following: a time range corresponding to one or more timeslots, or a time range corresponding to one or more symbols. That is, the first time range may be represented in granularity of timeslot and/or symbol.

In some embodiments, the first time range may be determined based on a subcarrier spacing corresponding to the first carrier and/or the second carrier. For example, the first time range is determined based on a minimum value among subcarrier spacings corresponding to the first carrier and the second carrier. Alternatively, the first time range is determined based on a maximum value among subcarrier spacings corresponding to the first carrier and the second carrier.

The following uses FIG. 12 as an example to describe the first time range. In FIG. 12, the first carrier is corresponding to a carrier 1, and the second carrier is corresponding to a carrier 2. A subcarrier spacing of the carrier 1 is 15kHz. A subcarrier spacing of the carrier 2 is 30kHz. In FIG. 12, for example, the first time range may correspond to or include one timeslot (14 symbols) corresponding to the carrier 1, that is, two timeslots (28 symbols) corresponding to the carrier 2. Alternatively, the first time range may include one timeslot (14 symbols) corresponding to the carrier 2, that is, one half timeslot (7 symbols) corresponding to the carrier 1. The following uses an example in which duration of one timeslot corresponding to a minimum value (15kH) of subcarrier spacings of the first carrier and the second carrier is the first time range as an example for description.

As shown in FIG. 12, in the first time range (one timeslot of a carrier 1), one or more sidelink transmissions on the first carrier correspond to transmissions of PSSCH (denoted as PSSCH1) and PSFCH on the carrier 1, where the PSFCH transmission may include transmissions of one or more PSFCH channels. One or more sidelink transmissions on the second carrier correspond to PSSCH (denoted as PSSCH2) in the first timeslot and PSSCH (denoted as PSSCH3) in the second timeslot on the carrier 2. A time domain resource of the PSSCH1 on the carrier 1 overlaps a time domain resource of the PSSCH2 on the carrier 2 and a time domain resource of the PSSCH3. A time domain resource of the PSFCH on the carrier 1 overlaps a time domain resource of the PSSCH3 on the carrier 2.

It may be learned from the first condition that, based on the first transmission power, the terminal device may determine whether to adjust the transmission power of the sidelink transmission. That is, the first transmission power may be a threshold for determining whether to adjust the transmission power in multi-carrier sidelink communication. How to determine the first transmission power will be described later, and details are not described here.

Based on the first condition, in a case of multi-carrier sidelink transmission, if a sum of transmission power of multiple sidelink transmissions overlapping in a time domain and/or in a time domain overlapping part of the first resource and the second resource is greater than the first transmission power, the terminal device may adjust the transmission power of the sidelink transmissions. Therefore, based on this application, in a multi-carrier sidelink communication process, the terminal device may perform power control based on a first condition, so as to avoid a transmission power abnormality on multiple carriers in a sidelink transmission process, and further avoid an abnormality of multi-carrier sidelink communication.

The following describes the first transmission power.

In some embodiments, the first transmission power may be determined based on one or more of the following: a maximum transmission power of the terminal device, a maximum output power (configured maximum output power) configured for a resource pool on the first carrier, a maximum transmission power (configured maximum transmission power) configured for a resource pool on the first carrier, a maximum output power configured for a resource pool on the second carrier, or a maximum transmission power configured for a resource pool on the second carrier.

In some implementation manners, the first transmission power may be determined based on the maximum transmission power of the terminal device. For example, the first transmission power may be equal to the maximum transmission power of the terminal device. Alternatively, the first transmission power may be equal to a result obtained by performing an operation on the maximum transmission power of the terminal device.

Optionally, the maximum transmission power of the terminal may be determined based on a power class (power class) of the terminal device. For example, for a power class 3, the maximum transmission power may be 23dBm. Alternatively, for the power class 2, the maximum transmission power may be 26dBm.

The maximum output power configured in the resource pool and the maximum transmission power configured in the resource pool may be determined according to a first parameter configured in the resource pool. The first parameter may be used to indicate a maximum value (the maximum value of the UE's sidelink transmission power on this resource pool) of the sidelink transmission power of the terminal device on the resource pool. A unit of the first parameter may be, for example, dBm. For example, the first parameter may be represented as sl-maxTransPower.

In some implementations, the first transmission power (denoted as P_TX1) may be determined based on the first threshold and/or the second threshold. For example, the first transmission power may be greater than or equal to a first threshold; and/or the first transmission power may be less than or equal to a second threshold. That is, the first threshold may be the upper limit value (denoted as P_TX1_H) of the first transmission power, and the second threshold may be the lower limit value (denoted as P_TX1_L) of the first transmission power. The first transmission power may meet $P\_TX1\_L \leq P\_TX1 \leq P\_TX1\_H$.

Both the first threshold and the second threshold may be determined based on one or more of the following: a second transmission power, a third transmission power, or a fourth transmission power, which are separately described below.

Second transmission power

The second transmission power may be determined based on a first parameter configured on a resource pool on the first carrier and/or the second carrier.

In some embodiments, the second transmission power may be determined based on a sum of all or a part of linear values (linear value) corresponding to the first parameters configured in the resource pool on the first carrier and the second carrier. For example, the second transmission power may be determined based on a sum of linear values corresponding to the first parameters configured on resource pools on all carriers of the first carrier and the second carrier. The sum may be represented, for example, by $P_{temp}$. That is, the $P_{temp}$ may be used to determine the second transmission power. For example, the decibel value corresponding to the second transmission power may be $10 \log_{10} P_{temp}$.

For example, if one or more sidelink transmissions on the first carrier or one or more sidelink transmissions on the second carrier include PSSCH and/or PSCCH, the first parameters configured in the resource pool on the first carrier and/or the second carrier may include the first parameter configured in the resource pool in which the PSSCH and/or the PSCCH are located. It may be understood that only one PSCCH and/or one PSSCH can be sent simultaneously on a same carrier. That is, a same carrier cannot send multiple PSCCH at the same time, or a same carrier cannot send multiple PSSCH at the same time. Therefore, the second transmission power may be determined based on the first parameters configured in a resource pool in which the PSSCH or the PSCCH is located. Alternatively, when the PSSCH and the PSCCH are simultaneously sent, the second transmission power may be determined based on the first parameters configured in the resource pools in which the PSSCH and the PSCCH are located.

Based on this, for PSSCH and/or PSCCH, one carrier may be corresponding to one first parameter. In calculating $P_{temp}$, a sum may be obtained according to a quantity of carriers to which PSSCH and/or PSCCH belong. For example, if one or more sidelink transmissions on the first carrier or one or more sidelink transmissions on the second carrier are both PSSCH and/or PSCCH, $P_{temp}$ may meet $P_{temp} = \Sigma_c P_{EMAX,c,r}$. $P_{EMAX,c,r}$ is determined based on a linear value corresponding to the first parameter configured on the resource pool r in which the PSSCH or the PSCCH on the carrier c is located.

For another example, if one or more sidelink transmissions on the first carrier and one or more sidelink transmissions on the second carrier include PSFCH, the first parameter configured on a resource pool on the first carrier and/or the second carrier may include first parameters separately configured in one or more resource pools in which the PSFCH is located.

On a same carrier, when only one resource pool is used to transmit the PSFCH, the second transmission power may be determined based on a first parameter configured by the resource pool in which the PSFCH is located. That is, when calculating $P_{temp}$, a sum may be obtained according to a quantity of carriers to which the PSFCH belongs. For example, if one or more sidelink transmissions on the first carrier or one or more sidelink transmissions on the second carrier are all PSFCH, and each carrier has only one resource pool for transmission of PSFCH, $P_{temp}$ may meet $P_{temp} = \Sigma_c P_{EMAX,c,r}$. $P_{EMAX,c,r}$ is determined based on a linear value corresponding to the first parameter configured on the resource pool r in which the PSFCH on the carrier c is located.

On a same carrier, when multiple resource pools are used to transmit PSFCH, the second transmission power may be determined based on a sum of first parameters configured in the multiple resource pools in which the PSFCH is located. That is, when calculating the $P_{temp}$, a sum may be obtained according to a quantity of carriers to which the PSFCH belongs and a quantity of resource pools in which the PSFCH is located on a corresponding carrier. For example, if one or more sidelink transmissions on the first carrier or one or more sidelink transmissions on the second carrier are all PSFCH, $P_{temp}$ may meet $P_{temp} = \Sigma_c \Sigma_r P_{EMAX,c,r}$

It should be noted that the foregoing method for determining the second transmission power may be implemented in combination. For example, one or more sidelink transmissions on the first carrier or one or more sidelink transmissions on the second carrier includes: PSCCH and/or PSSCH, and PSFCH, so that $P_{temp}$ may meet $P_{temp} = \Sigma_{c1} P_{EMAX,c1,r1} + \Sigma_{c2} \Sigma_{r2} P_{EMAX,c2,r2}$. The resource pool r1 on the carrier c1 is used to transmit the PSCCH and/or the PSSCH. The resource pool r2 on the carrier c2 is used to transmit the PSFCH. $P_{EMAX,c1,r1}$ is determined based on a linear value corresponding to the first parameter configured in the resource pool r1 on the carrier c1. $P_{EMAX,c2,r2}$ is determined based on a linear value corresponding to the first parameter configured on the resource pool r2 on the carrier c2. $\Sigma_{c1} P_{EMAX,c1,r1}$ represents the sum of the first parameters configured for the resource pool on which the PSSCH or the PSCCH is located on all carriers for transmitting the PSSCH or the PSCCH, and $\Sigma_{c2} \Sigma_{r2} P_{EMAX,c2,r2}$ represents the sum of the first parameters configured for the resource pool on which the PSFCH is located on all carriers for transmitting the PSFCH.

Third transmission power

The third transmission power may be determined according to a power class and/or a power reduction parameter of the terminal device.

Based on the power class, power of a power class $P_{PowerClass}$ can be determined. The third transmission power may be determined based on the $P_{PowerClass}$. For example, for the power class 3, $P_{PowerClass}$ may be 23dBm. For power class 2, $P_{PowerClass}$ may be 26dBm. The $P_{PowerClass}$ may be further determined in another manner. For example, the $P_{PowerClass}$ may be determined based on a maximum transmission power of the terminal device.

The power reduction parameter may include one or more of the following: a maximum power reduction (maximum power reduction, MPR), an additional maximum power reduction (additional maximum power reduction, A-MPR), and a power management maximum power reduction (power management maximum power reduction). The MPR may be determined based on a maximum power reduction value allowed by the terminal device. The A-MPR may be determined based on an additional maximum power reduction value allowed by the terminal device.

The third transmission power may be further determined based on other information. Other information may include, for example, additional tolerances (additional tolerance). Additional tolerances may be represented by $\Delta$TIB.

For different thresholds, the third transmission power may be calculated in different manners. For example, for the first threshold, the third transmission power may be determined according to a formula $P_{PowerClass}$ - MAX (MAX (MPR, A-MPR) + $\Delta$TIB, P-MPR). For another example, for the second threshold, the third transmission power may be $P_{PowerClass}$. Max (A, B) represents a maximum value among A and B.

Fourth transmission power

The fourth transmission power may be determined based on regulations. For ease of description, the following represents the fourth transmission power by using $P_{Regulatory}$.

In some embodiments, regulations may specify a specific area. For example, regulations may specify a dedicated short-range communication (dedicated short-range communication, DSRC) charging system protection area. A value of the fourth transmission power may be related to whether the terminal device is located in a DSRC charging system protection area. For example, when the terminal device operates on a frequency band n47 and is located in a DSRC charging system reserve area, the fourth transmission power may meet: $P_{Regulatory} = 10 - G_{post\,connector}$ dBm. When the terminal device does not operate in the frequency band n47 or is not located in the DSRC charging system reserve area, the fourth transmission power may meet: $P_{Regulatory} = 33 - G_{post\,connector}$ dBm. The value of $G_{post\,connector}$ may include: 0, 1, 2, 3, 4, 5, 6, or 7 dBi. The default value of $G_{post\,connector}$ may be 0 dBi.

In some embodiments, the first threshold and/or the second threshold may be determined according to a type of a sidelink signal or a sidelink channel included in one or more sidelink transmissions on the first carrier and one or more sidelink transmissions on the second carrier.

For example, if one or more sidelink transmissions on the first carrier and one or more sidelink transmissions on the second carrier include one or more of PSCCH, PSSCH, and PSFCH, the first threshold and/or the second threshold may be determined based on a minimum value among the second transmission power, the third transmission power, and the fourth transmission power. Exemplarily, the first threshold may meet: MIN $\{10\ \log_{10} P_{temp}, P_{PowerClass} -$ MAX(MAX(MPR , A-MPR)+ $\Delta T_{IB}$ , P-MPR), $P_{Regulatory}\}$; The second threshold may meet: MIN$\{10 \log_{10} P_{temp}, P_{PowerClass}, P_{Regulatory}\}$. The MIN (A, B, and C) represents a minimum value in A, B, and C.

For another example, if one or more sidelink transmissions on the first carrier and one or more sidelink transmissions on the second carrier include an SSB, the first threshold and/or the second threshold are determined based on a minimum value of the third power and the fourth power. Exemplarily, the first threshold may meet: MIN $\{P_{PowerClass} - $ MAX(MAX(MPR , A-MPR) $+ \square T_{IB}$ , P-MPR), $P_{Regulatory}\}$; The second threshold may meet: MIN $\{P_{PowerClass}, P_{Regulatory}\}$. MIN (A, B) indicates that a minimum value in A and B is obtained.

It is noted that the first condition may include: a sum of transmission power of multiple sidelink transmissions in the time domain overlapping part of the first carrier and the second carrier is greater than the first transmission power. Optionally, the sum of the transmission power of the multiple sidelink transmissions in the time domain overlapping part may be determined based on a maximum value of the sum of the transmission power of the multiple sidelink transmissions in the time domain overlapping part. FIG. 12 is still used as an example for description.

In FIG. 12, a transmission power of PSSCH1 is P1, a transmission power of PSSCH2 is P2, a transmission power of PSSCH3 is P3, and a sum of transmission power of PSFCH transmissions is P4. PSSCH1 and PSSCH2 are overlapped in time domain, and a sum of transmission power is P1+P2. PSSCH1 and PSSCH3 are overlapped in time domain, and a sum of transmission power is P1+P3. PSFCH and PSSCH3 are overlapped in time domain, and a sum of transmission power is P3+P4. Based on this, the sum of the transmission power of the multiple sidelink transmissions in the time domain overlapping part may be determined based on a maximum value among P1+P2, P1+P3, and P3+P4.

As described in step S1010, if the first condition is met, the terminal device may adjust transmission power of sidelink transmission. In some embodiments, after the terminal device adjusts the transmission power of the sidelink transmission, the transmission power of the sidelink transmission of the time domain overlapping part may be less than or equal to (that is, not greater than or not exceeding) the first transmission power.

In a possible implementation, the terminal device may reduce transmission power of one or more sidelink transmissions in the multiple sidelink transmissions in the time domain overlapping part, so that the transmission power of the sidelink transmissions in the time domain overlapping part is less than or equal to the first transmission power. For example, if one or more sidelink transmissions of the terminal device on the first carrier overlaps one or more sidelink transmissions of the terminal device on the second carrier in a time domain, and a sum of transmission power of the multiple sidelink transmissions in the time domain overlapping part of the first carrier and the second carrier is greater than the first transmission power, the terminal device may reduce transmission power of one or more sidelink transmissions in the time domain overlapping part, so that a sum of transmission power of the multiple sidelink transmissions in the overlapping part is not greater than the first transmission power or a transmission power of one or more sidelink transmissions in the time domain overlapping part is 0. If the transmission power of one or more sidelink transmissions in the time domain overlapping part is 0, and a sum of transmission power of the remaining sidelink transmissions in the time domain overlapping part is still greater than the first transmission power, the terminal device may select one or more sidelink transmissions in the remaining sidelink transmissions to continue to reduce the transmission power, so that a sum of transmission power of the multiple sidelink transmissions in the time domain overlapping part is not greater than the first transmission power or a transmission power of the one or more sidelink transmissions selected again is 0. If the transmission power of the selected one or more sidelink transmissions is 0, and the sum of the transmission power of the remaining sidelink transmissions in the time domain overlapping part is still greater than the first transmission power, the terminal device may repeatedly perform the foregoing step until the sum of the transmission power of the multiple sidelink transmissions of the time domain overlapping part is not greater than the first transmission power.

In another possible implementation, the adjustment of the transmission power of the sidelink transmission by the terminal device may depend on implementation of the terminal device. For example, the foregoing reducing transmission power of one or more sidelink transmissions (until the transmission power is 0) may be an implementation manner. For another example, the transmission power for one or more sidelink transmissions is reduced until the transmission power is a minimum transmission power value, and the minimum transmission power value may be determined by the terminal device independently, or may be determined based on pre-configuration information or network configuration information.

In some embodiments, the terminal device may adjust the transmission power of the sidelink transmission according to the sidelink priorities (priority for short) corresponding to the one or more sidelink transmissions on the first carrier and/or the sidelink priorities corresponding to the one or more sidelink transmissions on the second carrier. For PSSCH or PSCCH, the sidelink priority may be indicated by using a "priority (priority)" information field in sidelink control information (sidelink control information, SCI). For the PSFCH, the sidelink priority may be determined by using a priority of a PSSCH associated with sidelink feedback information carried in the PSFCH. For S-SSB, the sidelink priority may be determined based on pre-configuration information or network configuration information. A higher value of the sidelink priority indicates a lower priority of corresponding sidelink transmission.

In some implementation manners, the terminal device may determine, according to priorities associated with carriers, to adjust transmission power of sidelink transmission on a carrier or some carriers. The priority associated with the carrier may be determined according to a minimum value among sidelink priority values corresponding to one or more sidelink transmissions in a time domain overlapping part on a corresponding carrier. For example, the priority associated with the first carrier may be a first value. The first value may be determined according to a minimum value among sidelink priority values corresponding to one or more sidelink transmissions on the first carrier. The priority associated with the second carrier may be a second value. The second value may be determined according to a minimum value among sidelink priority values corresponding to one or more sidelink transmissions on the second carrier.

It should be noted that, in a case in which the second carrier includes multiple carriers, a priority associated with the second carrier may include one or more priorities. That is, the second value may include one or more values. For example, in a case in which the priority associated with the second carrier includes multiple priorities, a quantity of priorities may be the same as a quantity of carriers included in the second carrier. Multiple carriers may be in a one-to-one correspondence with multiple priorities, that is, each carrier in the multiple carriers may be corresponding to a respective priority. For example, a priority associated with a respective carrier may be determined according to a minimum value among sidelink priority values corresponding to one or more sidelink transmissions in a time domain overlapping part on the respective carrier. Alternatively, the multiple carriers may be generally corresponding to one priority. For example, one priority (that is, a second value) corresponding to the multiple carriers may be determined according to a minimum value among of the sidelink priority values corresponding to the multiple sidelink transmissions in the time domain overlapping part on the multiple carriers.

As described above, a smaller value of the sidelink priority of a sidelink transmission indicates a higher priority of the sidelink transmission. Therefore, based on a minimum priority value, in this application, a highest priority of one or more sidelink transmissions on a carrier may represent a priority of the carrier.

In some embodiments, the terminal device may adjust transmission power for sidelink transmission according to a relationship between the first value and the second value. For example, the terminal device may perform one or more of the following operations: if the first value is less than the second value, the terminal device may reduce transmission power of one or more sidelink transmissions on the second carrier; if the first value is less than or equal to the second value, the terminal device may reduce transmission power of one or more sidelink transmissions on the second carrier; if the first value is greater than the second value, the terminal device may reduce transmission power of one or more sidelink transmissions on the first carrier; or ff the first value is greater than or equal to the second value, the terminal device may reduce transmission power of one or more sidelink transmissions on the first carrier.

It should be noted that if the second value includes multiple values, when determining the relationship between the first value and the second value, any one of the following values corresponding to the multiple values may be used as the second value: a maximum value, a minimum value, or a value obtained by means of calculation. The multiple values obtained by means of calculation may be, for example, an average value of the multiple values. In the example of FIG. 12, PSSCH1 and PSFCH transmission on carrier 1 overlaps PSSCH2 and PSSCH3 on carrier 2 in time domain. Therefore, the priority associated with the carrier 1 and the carrier 2 may be determined according to the priorities of transmissions of the PSSCH1, the PSSCH2, the PSSCH3, and the PSFCH. The terminal device may adjust the transmission power according to priorities associated with the carrier 1 and the carrier 2. If a priority value corresponding to PSSCH1 is 3, PSFCH transmission includes four PSFCH, and a minimum value among priority values corresponding to the four PSFCH is 4, then a minimum value among sidelink priority values corresponding to one or more sidelink transmissions on the first carrier is 3, that is, the first value is 3. Priority values of the PSSCH2 and the PSSCH3 are respectively 2 and 5, and in this case, a minimum value among sidelink priority values corresponding to one or more sidelink transmissions on the second carrier is 2, that is, the second value is 2. According to a result of comparison of the priority values (the first value is greater than the second value), a transmission power of sidlink transmission (that is, transmission power of PSSCH1 and/or PSFCH) on the carrier 1 needs to be reduced.

In FIG. 12, a transmission power of PSSCH1 is P1, a transmission power of PSSCH2 is P2, a transmission power of PSSCH3 is P3, and a sum of transmission power of four PSFCHs is P4. The terminal device may adjust transmission power of sidelink transmissions according to different cases. The following uses a case 1~ case 3 as an example for description.

Case 1: If in the time domain overlapping part, the power sum P1+P2 is less than the first transmission power, P1+P3 is greater than the first transmission power, and P3+P4 is less than the first transmission power, then the terminal device may reduce the transmission power P1 of PSSCH1 until the power of P1+P3 is less than the first transmission power, or until P1 is equal to 0.

Case 2: If in the time domain overlapping part, the power sum P1+P2 is less than the first transmission power, P1+P3 is greater than the first transmission power, and P3+P4 is greater than the first transmission power, then the terminal device may reduce the transmission power P1 of the PSSCH1 until the power of the P1+P3 is less than the first transmission power, or until P1 is equal to 0. In addition, the terminal device may reduce the transmission power P4 of the PSFCH until the power sum of the P3+P4 is less than the first transmission power, or until P4 is equal to 0.

Case 3: If in the time domain overlapping part, the power sum P1+P2 is greater than the first transmission power, P1+P3 is greater than the first transmission power, and P3+P4 is greater than the first transmission power, the terminal device may reduce the transmission power P1 of the PSSCH1 until the power sum P1+P2 is less than the first transmission power and the power sum P1+P3 is less than the first transmission power, or until P1 is equal to 0. In addition, the terminal device may reduce the transmission power P4 of the PSFCH until the power sum P3+P4 is less than the first transmission power, or until P4 is equal to 0.

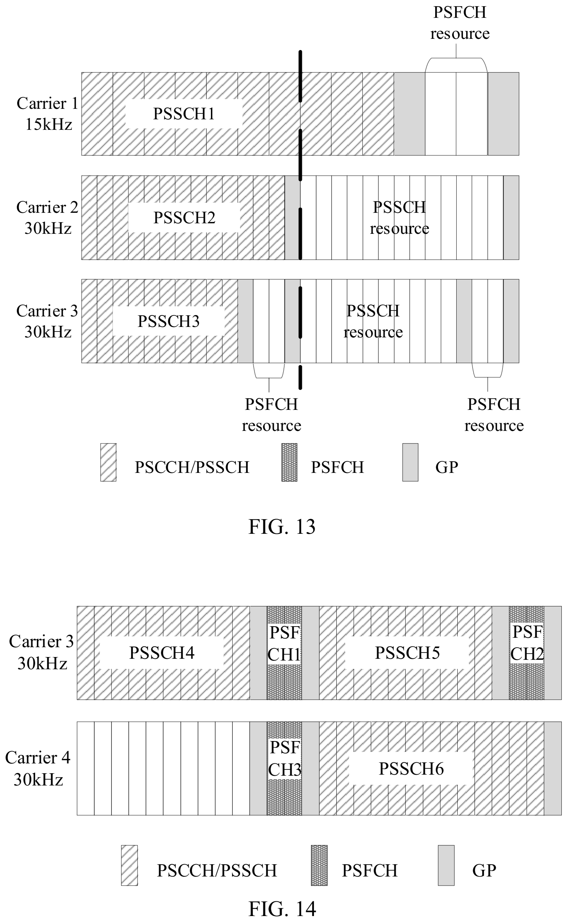

In a case in which the second carrier includes multiple carriers, the terminal device may select a carrier with a highest associated priority value among the first carrier and the multiple carriers as the target carrier, and adjust or reduce transmission power of one or more sidelink transmissions in a time domain overlapping part on the target carrier. After transmission power of the one or more sidelink transmissions in the time domain overlapping part on the target carrier is adjusted or reduced (for example, reduced to 0), if the sum of transmission power of the sidelink transmissions in the time domain overlapping part on the remaining carrier is still greater than the first transmission power, the terminal device may repeatedly adjust or reduce the transmission power of one or more sidelink transmissions in the time domain overlapping part on the target carrier by using a carrier with a highest priority value in the remaining carrier as the target carrier, until the transmission power of sidelink transmission in the time domain overlapping part is less than or equal to the first transmission power. In other words, the terminal device may first adjust transmission power of one or more sidelink transmissions in a time domain overlapping part on a carrier with a highest priority value. If the sum of transmission power in the time domain overlapping part after the adjustment is still relatively high, the terminal device may select a carrier with a highest priority value from remaining carriers to continue to adjust one or more sidelink transmissions in the time domain overlapping part until the sum of transmission power in the time domain overlapping part meets a requirement (for example, does not exceed the first transmission power). The following uses FIG. 13 as an example for description.

As shown in FIG. 13, the terminal device performs sidelink transmission on the carrier 1, the carrier 2, and the carrier 3. The terminal device transmits the PSSCH1 in the PSSCH transmission resource on the carrier 1, and does not transmit PSFCH in the PSFCH resource of the timeslot. The terminal device transmits the PSSCH2 in the PSSCH resource in the first timeslot of the carrier 2, and does not transmit the PSSCH in the PSSCH resource in the second timeslot. The terminal device transmits the PSSCH3 in the PSSCH resource in the first timeslot of the carrier 3, does not transmit PSFCH in the first timeslot of the carrier 3, does not transmit PSSCH in the PSSCH resource in the second timeslot of the carrier 3, and does not transmit the PSFCH in the PSFCH resource of the second timeslot of the carrier 3. Transmission power corresponding to PSSCH1, PSSCH2, and PSSCH3 are respectively P1, P2, and P3, and P1+P2+P3 is greater than the first transmission power. Values of sidelink priorities corresponding to PSSCH1, PSSCH2, and PSSCH3 are 2, 3, and 4 respectively. Therefore, priorities associated with the carrier 1, the carrier 2, and the carrier 3 are respectively 2, 3, and 4. Because a priority associated with the carrier 3 is the lowest (a highest value), the transmission power P3 of the PSSCH3 on the carrier 3 is adjusted. If the adjusted P3 meets that the P1+P2+P3 is not greater than the first transmission power, the terminal device may send the PSSCH3 by using the adjusted P3, and separately send the PSSCH1 and the PSSCH2 by using P1 and P2. If P3 is adjusted to 0, and P1+P2 is still greater than the first transmission power, the terminal device may select, according to priorities associated with the carrier 1 and the carrier 2, to further adjust the transmission power P2 of the PSSCH2 on the carrier 2, so that P1+P2 is not greater than the first transmission power or adjust P2 to 0, and so on.

In a possible implementation, the terminal device may reduce, according to the sidelink priorities corresponding to the sidelink transmissions, transmission power of one or more sidelink transmissions in the multiple sidelink transmissions in the time domain overlapping part. The one or more of the multiple sidelink transmissions in the time domain overlapping part may belong to a same carrier (for example, a target carrier), or may belong to different carriers.

In some embodiments, the terminal device may adjust or reduce transmission power of a first sidelink transmission, where the first sidelink transmission is sidelink transmission with a maximum value among corresponding sidelink priorities of sidelink transmissions in a time domain overlapping part. After the transmission power of the first sidelink transmission is adjusted or reduced (for example, reduced to 0), if the transmission power of the remaining sidelink transmissions in the time domain overlapping part is greater than the first transmission power, the terminal device uses a sidelink transmission with a maximum value among sidelink priorities of the remaining sidelink transmissions as the first sidelink transmission, and repeatedly performs a step of reducing the transmission power of the first sidelink transmission until the transmission power of the sidelink transmissions in the time domain overlapping part is less than or equal to the first transmission power. The following separately uses FIG. 14 and FIG. 13 as examples for description.

In FIG. 14, the first timeslot of the carrier 3 includes transmission resources of PSSCH4 and PSFCH1. The second timeslot of the carrier 3 includes transmission resources of PSSCH5 and PSFCH2. The first timeslot of the carrier 4 includes a transmission resource of PSFCH3. The second timeslot of the carrier 4 includes a transmission resource of PSSCH6. As shown in FIG. 14, PSFCH1 and PSFCH3 overlaps in time domain, the time domain resource of PSSCH6 overlaps time domain resources of PSSCH5 and PSFCH2, and there is no sidelink transmission in carrier 4 that overlaps a time domain resource of PSSCH4. For a time domain overlapping part of the PSFCH1 and the PSFCH3, if a sum of transmission power of the PSFCH1 and the PSFCH3 exceeds the first transmission power, the transmission power of the PSFCH1 or the PSFCH3 is adjusted based on a priority comparison result of the PSFCH1 and the PSFCH3. For example, if the priority value of the PSFCH1 is less than the priority value of the PSFCH3, the transmission power of the PSFCH3 is adjusted or reduced until the sum of the transmission power of the PSFCH1 and the PSFCH3 is less than or equal to the first transmission power, or until the transmission power of the PSFCH3 is 0.

The following continues to describe, with reference to FIG. 14, a case in which one or more sidelink transmissions in the multiple sidelink transmissions in the time domain overlapping part adjusted or reduced by the terminal device may belong to a same carrier.

For a time domain overlapping part of the PSSCH6 and PSSCH5/PSFCH2, if a sum of transmission power of the PSSCH5 and the PSSCH6 exceeds the first transmission power, or a sum of transmission power of the PSFCH2 and the PSSCH6 exceeds the first transmission power, then a minimum value among priority values of the PSSCH5 and the PSFCH2 is compared with a priority value of the PSSCH6. If the minimum value among the priority values of the PSSCH5 and the PSFCH2 is less than the priority value corresponding to the PSSCH6, the transmission power of the PSSCH6 is adjusted until a sum of transmission power of sidelink transmissions on the two carriers in time domain overlapping part does not exceed the first transmission power or until the transmission power of the PSSCH6 is 0. If the minimum value among the priority values of the PSSCH5 and the PSFCH2 is greater than the priority value corresponding to the PSSCH6, the transmission power of the PSSCH5 and/or the PSFCH2 is adjusted. If the sum of the transmission power of the PSSCH5 and the PSSCH6 exceeds the first transmission power, and the sum of the transmission power of the PSFCH2 and the PSSCH6 is less than the first transmission power, the transmission power of the PSSCH5 is adjusted until the sum of the transmission power of the PSSCH5 and the PSSCH6 does not exceed the first transmission power, or until the transmission power of the PSSCH5 is 0. If the sum of the transmission power of the PSSCH5 and the PSSCH6 exceeds the first transmission power, and the sum of the transmission power of the PSFCH2 and the PSSCH6 also exceeds the first transmission power, then the transmission power of the PSSCH5 is adjusted until the sum of the transmission power of the PSSCH5 and the PSSCH6 does not exceed the first transmission power or until the transmission power of the PSSCH5 is 0, and the transmission power of the PSSCH2 is adjusted until the sum of the transmission power of the PSSCH2 and the PSSCH6 does not exceed the first transmission power or until the transmission power of the PSSCH2 is 0.

As shown in FIG. 13, transmission power corresponding to PSSCH1, PSSCH2, and PSSCH3 are respectively P1, P2, and P3, and P1+P2+P3 is greater than the first transmission power, and values of sidelink priorities corresponding to PSSCH1, PSSCH2, and PSSCH3 are respectively 2, 3, and 4. Because a priority of the PSSCH3 is the lowest, the transmission power P3 of the PSSCH3 is adjusted. If the adjusted P3 meets that P1+P2+P3 is not greater than the first transmission power, the terminal device may send the PSSCH3 by using the adjusted P3, and separately send the PSSCH1 and the PSSCH2 by using P1 and P2. If P3 is adjusted to 0, and P1+P2 is still greater than the first transmission power, the terminal device may further adjust transmission power P2 of PSSCH2, so that P1+P2 is not greater than the first transmission power, and so on.

Optionally, transmission power of multiple sidelink transmissions may be reduced in an equal proportion. For example, if a quantity of sidelink transmissions whose transmission power are to be reduced is M, the terminal device may equally reduce transmission power of the M sidelink transmissions. M may be a positive integer greater than 1. For example, the total transmission power of the M sidelink transmissions is P_total. When the total transmission power of the M sidelink transmissions is adjusted to P_target, the total transmission power of the time domain overlapping part is not greater than the first transmission power. Therefore, power of each sidelink transmission needs to be adjusted from P_total/N to P_target/M.

It should be noted that the sidelink transmission priorities of the M sidelink transmissions may be the same or different. For example, the terminal device may reduce the transmission power of the M sidelink transmissions equally without considering the sidelink transmission priorities of the M sidelink transmissions. Alternatively, in a case in which the sidelink transmission priorities of the M sidelink transmissions are equal, the terminal device may equally reduce transmission power of the M sidelink transmissions.

It should be noted that the M sidelink transmission may belong to a same carrier. For example, the same carrier may be the foregoing target carrier. In other words, if there are M sidelink transmissions on the target carrier that need to reduce the transmission power, the terminal device may equally reduce the transmission power of the M sidelink transmissions on the target carrier.

Referring to FIG. 14, as described above, if a minimum value among priority values of PSSCH5 and PSFCH2 on the carrier 3 is greater than a priority value corresponding to PSSCH6 on the carrier 4, the terminal device may adjust transmission power of PSSCH5 and/or PSFCH2. For example, the terminal device may adjust transmission power of the PSSCH5 and the PSFCH2 equally. Alternatively, if the priority value of the PSSCH5 is less than the priority value of the PSFCH2, the terminal device may adjust the transmission power of the PSFCH2 until a sum of the transmission power of the PSFCH2 is 0 or until the total power of the PSSCH5, the PSFCH2, and the PSSCH6 is less than the first transmission power. Alternatively, if the priority value of the PSSCH5 is greater than or equal to the priority value of the PSFCH2, the terminal device may adjust the transmission power of the PSSCH5 until the transmission power of the PSSCH5 is 0 or until the total power of the PSSCH5, the PSFCH2, and the PSSCH6 is less than the first transmission power.

In some embodiments, if the sidelink transmission of which the transmission power needs to be adjusted includes N PSFCHs, the terminal device may adjust the transmission power of the N PSFCHs in the following manner 1 and manner 2. N may be a positive integer greater than or equal to 1.

Manner 1: Adjust transmission power of the N PSFCHs according to sidelink priorities corresponding to the N PSFCHs.

For example, the terminal device may reduce transmission power of a first PSFCH, where the first PSFCH is a PSFCH with a maximum value among sidelink priorities of the N PSFCHs. In a case in which the transmission power of the first PSFCH is reduced to 0, if the transmission power of the remaining sidelink transmissions in the time domain overlapping part is greater than the first transmission power, the terminal device repeatedly performs a step of reducing the transmission power of a first PSFCH until the transmission power of the sidelink transmissions in the time domain overlapping part is less than or equal to the first transmission power by using the PSFCH corresponding to the highest sidelink priority value among the remaining PSFCHs as the first PSFCH. In other words, the terminal device may reduce, according to the priorities corresponding to the N PSFCHs, the transmission power of the PSFCH that has the highest priority value (that is, corresponding to the lowest priority) to 0, and repeat the foregoing steps until the total transmission power in the overlapping time domain part is not greater than the first transmission power.

Manner 2: transmission power of the N PSFCHs are reduced equally. For example, the terminal device may equally reduce transmission power of each PSFCH of the N PSFCHs until a total transmission power in a time domain overlapping part is not greater than the first transmission power, or until a transmission power of the N PSFCHs is 0. For example, the total transmission power of the N PSFCHs is P_PSFCH_total. When the total transmission power of the N PSFCHs is adjusted to P_PSFCH_target, the total transmission power of the time domain overlapping part is not greater than the first transmission power. Therefore, power of each PSFCH needs to be adjusted from P_PSFCH_total/N to P_PSFCH_target/N.

Optionally, if the multiple sidelink transmissions in the time domain overlapping part includes PSFCH transmission, the PSFCH transmission may include one or more PSFCHs. Before power adjustment is performed based on the foregoing criterion, a quantity of PSFCH channels in PSFCH transmission on one carrier and a transmission power of the PSFCH may be determined based on the following manner.

For a carrier, there may be multiple PSFCHs that need to be simultaneously transmitted in a PSFCH transmission opportunity on the carrier. The terminal device may determine, according to the following information, a quantity $N_{\text{Tx},PSFCH}$ of PSFCHs that need to be simultaneously transmitted and/or transmission power on each PSFCH: a maximum quantity $N_{\text{max},PSFCH}$ of PSFCHs that can be simultaneously transmitted by the terminal device and a second transmission power. The following describes a manner of determining the second transmission power.

The second transmission power may be determined based on one or more of the following: the maximum available transmission power for PSFCH, the maximum transmission power of the terminal device, the configured maximum output power (or the configured maximum transmission power), or a sum of the maximum output powers configured for resource pools on multiple carriers on which the multiple sidelink transmissions overlapping in time domain are located, which are separately described below.

The maximum available transmission power for PSFCH may be represented as $P_{available}$. Optionally, $P_{available}$ may be determined according to one or more of the following parameters: priority values of multiple time domain overlapped sidelink transmissions on multiple carriers, first transmission power, or transmission power of time domain overlapped sidelink transmissions on multiple carriers except the multiple to-be-transmitted PSFCH corresponding to the PSFCH transmission opportunity.

In one implementation, $P_{available}$ may satisfy $P_{available} = max(P_{TX1} - \sum_{c=1}^{C} P_c , 0)$. $P_{TX1}$ represents the first transmission power, and C represents a quantity of carriers whose priority values are less than a value of $P_{prio}$ among multiple time domain overlapped sidelink transmissions on multiple carriers. $P_{prio}$ represents a minimum value among priorities corresponding to multiple PSFCHs to be transmitted in the PSFCH transmission opportunity. $P_c$ represents transmission power of sidelink transmission on c-th carrier in C carriers. In one implementation, the second transmission power is equal to the maximum available transmission power of PSFCH (i.e., $P_{available}$).

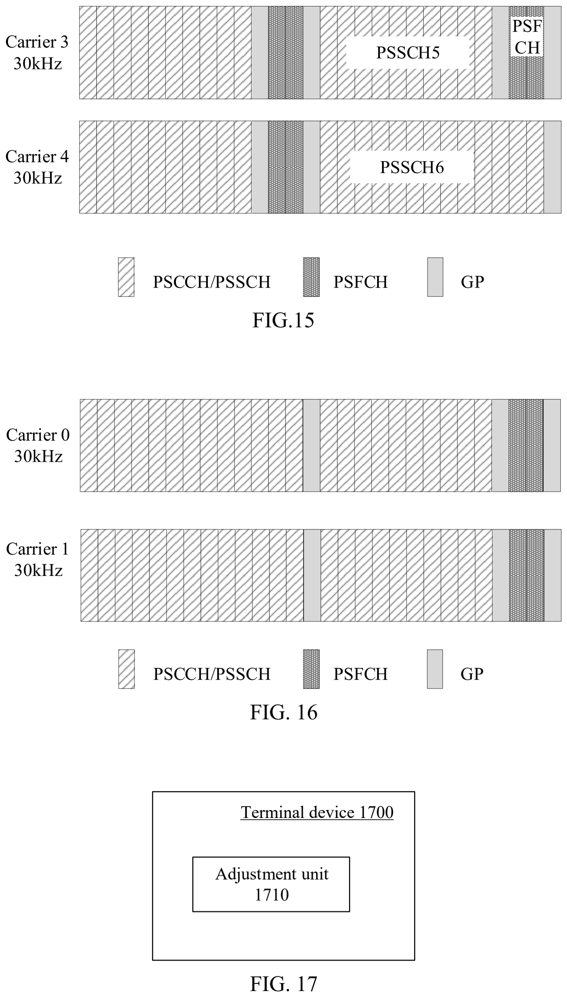

For example, as shown in FIG. 15, the PSFCH transmission opportunity in the second timeslot of the carrier 3 includes multiple to-be-transmitted PSFCHs. A highest priority value of the PSFCHs in the multiple to-be-transmitted PSFCHs is 3. PSSCH5 and PSFCH on the carrier 3 overlap the PSSCH6 on the carrier 4 in time domain resources, and a sum of transmission power of the PSSCH5 and the PSSCH6 is less than the first transmission power. If the value corresponding to the highest priority of the multiple to-be-transmitted PSFCHs is greater than the value corresponding to the priority of the PSSCH6, when a sum of transmission power of the PSFCHs and transmission power of the PSSCH6 exceeds the first transmission power, the transmission power of the PSFCHs needs to be reduced. Therefore, the maximum available transmission power for PSFCH may be determined based on the first transmission power and the transmission power of the PSSCH6. For example, $P_{available}$ = $P_{TX1}$ - $P_{PSSCH6}$, where $P_{TX1}$ indicates the first transmission power, and $P_{PSSCH6}$ indicates the transmission power of the PSSCH6.

The maximum transmission power of the terminal device may be determined, for example, based on a power class of the terminal device.

The configured maximum output power (or configured maximum output power) is used to determine a maximum transmission power of the terminal device on a resource pool or a carrier. The configured maximum output power (or configured maximum output power) may be determined based on a first parameter (e.g., a parameter sl-maxTransPower) configured by the upper layer.

A sum of configured maximum output powers of the resource pools on the multiple carriers on which the multiple sidelink transmissions overlapping in time domain are located may be represented as $P_{TX}$. $P_{TX}$ may satisfy

$$P_{TX} = \sum_{c=0}^{C-1} \sum_{r=0}^{R-1} P_{Emax,r,c}$$ . $P_{Emax,r,c}$ represents a configured maximum output power of the resource pool r of the carrier c, C represents a quantity of carriers on which the multiple sidelink transmissions overlapping in time domain are located, R represents a quantity of resource pools corresponding to PSFCHs that need to be transmitted simultaneously on one carrier, and the resource pool r represents a resource pool on which the multiple sidelink transmissions overlapping in time domain are located. In one implementation, the second transmission power is equal to the sum (that is, $P_{TX}$) configured maximum output powers of the resource pools on the multiple carriers on which the multiple sidelink transmissions overlapping in time domain are located.

A quantity of PSFCHs that are determined by a terminal device as PSFCHs to be transmitted in the PSFCH transmission opportunity may be represented as $N_{sch,Tx,PSFCH}$. The $N_{sch,Tx,PSFCH}$ PSFCHs may include a PSFCH that carries HARQ information and/or conflict information (conflict information). The terminal device may determine, according to $N_{max,PSFCH}$ and $N_{sch,Tx,PSFCH}$, a quantity $N_{Tx,PSFCH}$ of PSFCHs to be simultaneously transmitted, and determine a transmission power on each PSFCH.

An overall principle of determining the actual transmission power $P_{PSFCH}$ of each PSFCH and the quantity $N_{Tx,PSFCH}$ of PSFCH actually transmitted by the terminal is as follows: transmission power of each PSFCH is the same and does not exceed $P_{PSFCH,one}$, and total transmission power of $N_{Tx,PSFCH}$ PSFCHs does not exceed the foregoing second transmission power. If the total transmission power exceeds the second transmission power, the terminal determines a quantity of PSFCHs to be transmitted according to the PSFCH priorities, but the quantity of PSFCHs to be transmitted is not less than a lower limit, so that each PSFCH has transmission power less than or equal to $P_{PSFCH,one}$. The calculation formula for $P_{PSFCH,one}$ is as follows:

$$P_{PSFCH,one} = P_{O\_PSFCH} + 10\log_{10}(2^u) + \alpha_{PSFCH} \cdot PL_D[\text{dBm}]$$

$P_{O\_PSFCH}$ represents a PSFCH transmission power basic working point used for power control based on downlink loss and configured by upper layer signaling; $\alpha_{PSFCH}$ is the downlink path loss compensation factor for the PSFCH power control which is configured by the upper layer signaling (if not configured, the corresponding value may be 1). $PL_D$ is the downlink path loss estimated by the terminal device.

In some embodiments, for each of case 1 to case 4, this application proposes a method for determining actual transmission power $P_{PSFCH}$ of each PSFCH and a quantity $N_{Tx,PSFCH}$ of PSFCH actually transmitted by a terminal.

Case 1: The upper-layer configures to apply power control based on downlink path loss to PSFCH, and $N_{sch,Tx,PSFCH}$ does not exceed $N_{max,PSFCH}$, and a condition $P_{PSFCH,one} + 10\log_{10}(N_{sch,Tx,PSFCH}) \leq P_{TX2}$ is met, that is, when power

$P_{PSFCH}$ of each PSFCH is set to $P_{PSFCH,one}$, the total power also does not exceed the second transmission power $P_{TX2}$.

In case 1, the terminal device may determine the following information:

$$N_{\mathrm{Tx},PSFCH} = N_{\mathrm{sch},\mathrm{Tx},PSFCH};$$

$$P_{PSFCH} = P_{PSFCH,one}.$$

Case 2: The upper-layer configures to apply power control based on downlink path loss to PSFCH, and $N_{\mathrm{sch},\mathrm{Tx},PSFCH}$ does not exceed $N_{\mathrm{max},PSFCH}$, but $P_{PSFCH,one} + 10\log_{10}(N_{\mathrm{sch},\mathrm{Tx},PSFCH}) > P_{TX2}$.

In case 2, the terminal device may autonomously determine that $N_{\mathrm{Tx},PSFCH}$ is not less than a lower limit value $N_{\mathrm{limit}}$.

For example, the determining method for $N_{\mathrm{limit}}$ may include: sorting, by the terminal device, the scheduled $N_{\mathrm{sch},\mathrm{Tx},PSFCH}$ PSFCHs according to a descending order of priority, and successively adding power of the PSFCHs according to transmission power $P_{PSFCH,one}$, where a maximum quantity of PSFCHs whose total power does not exceed $P_{TX2}$ is $N_{\mathrm{limit}}$ ($0 \le N_{\mathrm{limit}} < N_{\mathrm{sch},\mathrm{Tx},PSFCH}$).

The terminal device may determine that: $P_{PSFCH}$ meets:

$$P_{PSFCH} = \min(P_{TX2} - 10\log_{10}(N_{\mathrm{Tx},PSFCH}), P_{PSFCH,one}) \quad [\mathrm{dBm}].$$

Case 3: The upper-layer configures to apply power control based on downlink path loss to PSFCH, and $N_{\mathrm{sch},\mathrm{Tx},PSFCH}$ exceeds $N_{\mathrm{max},PSFCH}$.

In case 3, the terminal device may select $N_{\mathrm{max},PSFCH}$ PSFCHs with the highest PSFCH sidelink priorities from $N_{\mathrm{sch},\mathrm{Tx},PSFCH}$ PSFCHs according to PSFCH sidelink priorities, and then select $N_{\mathrm{Tx},PSFCH}$ PSFCHs from $N_{\mathrm{max},PSFCH}$ PSFCHs. Specifically, a method for determining the $N_{\mathrm{Tx},PSFCH}$ PSFCHs and the transmission power of each PSFCH is the same as that in the foregoing cases (1) and (2), only needing to replace $N_{\mathrm{sch},\mathrm{Tx},PSFCH}$ in cases (1) and (2) with $N_{\mathrm{max},PSFCH}$.

Case 4: The upper-layer does not configure to apply power control based on downlink path loss to PSFCH.

In case 4, the terminal device may independently select $N_{\mathrm{Tx},PSFCH}$ ($N_{\mathrm{Tx},PSFCH} \ge 1$) PSFCHs according to a descending order of PSFCH sidelink priorities, and transmission power of each PSFCH may be: $P_{PSFCH} = P_{TX2} - 10\log_{10}(N_{\mathrm{Tx},PSFCH})$[dBm].

Optionally, the foregoing process of determining the PSFCHs may be separately performed on each carrier. In this case, the maximum quantity $N_{\mathrm{max},PSFCH}$ of PSFCHs that can be simultaneously transmitted by the terminal device may indicate the maximum quantity of PSFCH that can be simultaneously transmitted by the terminal device on one carrier.

Optionally, the foregoing process of determining the PSFCHs may be performed on multiple carriers included in one frequency band. In this case, the maximum quantity $N_{\mathrm{max},PSFCH}$ of PSFCHs that can be simultaneously transmitted by the terminal device may indicate that the maximum quantity of PSFCH that can be simultaneously transmitted by the terminal device on all carriers included in one frequency band. The following uses FIG. 16 as an example for description.

As shown in FIG. 16, a carrier 0 and a carrier 1 are located on a same frequency band (band). There are 6 to-be-transmitted PSFCHs in the PSFCH transmission opportunity on carrier 0. There are 5 to-be-transmitted PSFCH s in the PSFCH transmission opportunity on the carrier 1. If a quantity of PSFCH that can be simultaneously transmitted by the terminal device in one frequency band is $N_{\mathrm{max},PSFCH} = 8$, the terminal device selects 8 PSFCHs from a total of 11 to-be-transmitted PSFCHs, and calculates a transmission power of each PSFCH as $P_{PSFCH,one}$. If 6 PSFCHs are selected from the carrier 0, the total transmission power of the 6 PSFCHs is $6 \cdot P_{PSFCH,one}$. If 2 PSFCHs are selected from the carrier 1, the total transmission power of the 2 PSFCHs is $2 \cdot P_{PSFCH,one}$.

Optionally, the foregoing process of determining the PSFCHs may be performed on multiple carriers. The multiple carriers may be located in different frequency bands. In this case, the maximum quantity $N_{\mathrm{max},PSFCH}$ of PSFCHs that can be simultaneously transmitted by the terminal indicates a maximum quantity of PSFCHs that can be simultaneously transmitted by the terminal on all carriers, or a maximum quantity of PSFCHs that can be simultaneously transmitted by the terminal.

The foregoing describes the method embodiments of this application in detail, and the following describes the apparatus embodiments of this application in detail. It should be understood that the descriptions of the method embodiments correspond to descriptions of the apparatus embodiments, and therefore, for parts that are not described in detail, reference may be made to the foregoing method embodiments.

FIG. 17 is a schematic structural diagram of a terminal device 1700 according to an embodiment of this application. The terminal device 1700 may include an adjustment unit 1710.

The adjustment unit 1710 may be configured to: adjust a transmission power of a sidelink transmission when a first condition is met. The first condition includes one or more of the following: one or more sidelink transmissions of the terminal device on a first carrier overlap in time domain with one or more sidelink transmissions of the terminal device on a second carrier; or a sum of transmission power of a plurality of sidelink transmissions in a time domain overlapping part of the first carrier and the second carrier is greater than a first transmission power.

In some embodiments, the first transmission power is determined based on one or more of the following: a maximum transmission power of the terminal device; a configured maximum output power of a resource pool on the first carrier; a configured maximum transmission power of a resource pool on the first carrier; a configured maximum output power of a resource pool on the second carrier; or a configured maximum transmission power of a resource pool on the second carrier.

In some embodiments, the first transmission power is greater than or equal to a first threshold; and/or the first transmission power is less than or equal to a second threshold.

In some embodiments, the first threshold and/or the second threshold are determined based on one or more of following: a second transmission power, determined based on a first parameter configured for a resource pool on the first carrier and/or the second carrier; a third transmission power, determined based on a power class and/or a power reduction parameter of the terminal device; or a fourth transmission power, determined based on regulations; wherein the first parameter is used to indicate a maximum value of sidelink transmission power of the terminal device on the resource pool.

In some embodiments, the second transmission power is determined based on a sum of linear values corresponding to first parameters configured for resource pools on the first carrier and the second carrier.

In some embodiments, if the one or more sidelink transmissions on the first carrier or the one or more sidelink transmissions on the second carrier comprise PSSCH and/or PSCCH, the first parameter configured for the resource pool on the first carrier and/or the second carrier comprises the first parameter configured for a resource pool in which the PSSCH and/or the PSCCH are located.

In some embodiments, if the one or more sidelink transmissions on the first carrier and the one or more sidelink transmissions on the second carrier comprise a PSFCH, the first parameter configured for the resource pool on the first carrier and/or the second carrier comprises first parameters respectively configured for one or more resource pools in which the PSFCH is located.

In some embodiments, if the one or more sidelink transmissions on the first carrier and the one or more sidelink transmissions on the second carrier comprise one or more of a PSCCH, a PSSCH, or a PSFCH, the first threshold and/or the second threshold are determined based on a minimum value among the second transmission power, the third transmission power and the fourth transmission power.

In some embodiments, the first threshold meets: MIN $\{10 \log_{10} P_{temp}, P_{PowerClass} - MAX(MAX(MPR , A\text{-}MPR) + \Delta T_{IB} , P\text{-}MPR), P_{Regulatory}\}$; the second threshold meets: MIN$\{10 \log_{10} P_{temp} , P_{PowerClass}, P_{Regulatory}\}$; wherein $10 \log_{10} P_{temp}$ represents the second transmission power, $P_{PowerClass}$ represents a power determined based on the power class of the terminal device, MPR represents a maximum power reduction, A-MPR represents an additional maximum power reduction, $\Delta T_{IB}$ represents an additional tolerance, P-MPR represents a power management maximum power reduction, and $P_{Regulatory}$ represents the fourth transmission power.

In some embodiments, if the one or more sidelink transmissions on the first carrier and the one or more sidelink transmissions on the second carrier comprise an SSB, the first threshold and/or the second threshold are determined based on a minimum value among the third power and the fourth power.

In some embodiments, the first threshold meets: MIN $\{P_{PowerClass} - MAX(MAX(MPR , A\text{-}MPR) + \Delta T_{IB} , P\text{-}MPR), P_{Regulatory}\}$; the second threshold meets: MIN $\{P_{PowerClass}, P_{Regulatory}\}$; wherein $P_{PowerClass}$ represents a power determined based on the power class of the terminal device, MPR represents a maximum power reduction, A-MPR represents an additional maximum power reduction, $\Delta T_{IB}$ represents an additional tolerance, P-MPR represents a power management maximum power reduction, and $P_{Regulatory}$ represents the fourth transmission power.

In some embodiments, the power reduction parameter includes one or more of the following: a maximum power reduction; an additional maximum power reduction; or a power management maximum power reduction.

In some embodiments, the sum of the transmission power of the plurality of sidelink transmissions in the time domain overlapping part is determined based on a maximum value of the sum of the transmission power of the plurality of sidelink transmissions in the time domain overlapping part.

In some embodiments, the adjustment unit 1710 is specifically configured to adjust the transmission power of the sidelink transmission according to sidelink priorities corresponding to the one or more sidelink transmissions on the first carrier and/or sidelink priorities corresponding to the one or more sidelink transmissions on the second carrier.

In some embodiments, adjusting the transmission power of the sidelink transmission according to the sidelink priorities corresponding to the one or more sidelink transmissions on the first carrier and/or the sidelink priorities corresponding to the one or more sidelink transmissions on the second carrier includes: adjusting the transmission power of the sidelink transmission according to a relationship between a first value and a second value; wherein the first value is determined according to a minimum value among sidelink priority values corresponding to the one or more sidelink transmissions on the first carrier, and the second value is determined according to a minimum value among sidelink priority values corresponding to the one or more sidelink transmissions on the second carrier.

In some embodiments, adjusting the transmission power of the sidelink transmission according to the relationship between the first value and the second value includes one of the following: if the first value is less than the second value, reducing transmission power of the one or more sidelink transmissions on the second carrier; if the first value is less than or equal to the second value, reducing transmission power of the one or more sidelink transmissions on the second carrier; if the first value is greater than the second value, reducing transmission power of the one or more sidelink transmissions on the first carrier; or if the first value is greater than or equal to the second value, reducing transmission power of the one or more sidelink transmissions on the first carrier.

In some embodiments, the second carrier includes multiple carriers. The adjusting the transmission power of the sidelink transmission according to the sidelink priorities corresponding to the one or more sidelink transmissions on the first carrier and/or the sidelink priorities corresponding to the one or more sidelink transmissions on the second carrier includes: reducing transmission power of one or more sidelink transmissions in the time domain overlapping part on a target carrier, wherein the target carrier is a carrier with a highest priority value among the first carrier and the plurality of carriers, and each of priority values associated with the first carrier and the plurality of carriers is determined according to a minimum value among sidelink priority values corresponding to one or more sidelink transmissions on a respective carrier; and in a case in which the transmission power of the one or more sidelink transmissions in the time domain overlapping part on the target carrier are reduced to 0, if a transmission power of sidelink transmissions in the time domain overlapping part on remaining carriers is greater than the first transmission power, repeatedly performing a step of reducing transmission power of one or more sidelink transmissions in the time domain overlapping part on a target carrier by using a carrier with a highest priority value among remaining carriers as the target carrier until a transmission power of sidelink transmissions in the time domain overlapping part is less than or equal to the first transmission power.

In some embodiments, the adjustment unit 1710 is specifically configured to reduce transmission power of one or more sidelink transmissions among the plurality of sidelink transmissions in the time domain overlapping part, to make a transmission power of sidelink transmissions in the time domain overlapping part is less than or equal to the first transmission power.

In some embodiments, the reducing the transmission power of the one or more sidelink transmissions among the plurality of sidelink transmissions in the time domain overlapping part includes: reducing a transmission power of a first sidelink transmission, wherein the first sidelink transmission is a sidelink transmission corresponding to a maximum sidelink priority value among the sidelink transmissions in the time domain overlapping part; and in a case in which the transmission power of the first sidelink transmission is reduced to 0, if a transmission power of remaining sidelink transmissions in the time domain overlapping part is greater than the first transmission power, repeatedly performing a step of reducing a transmission power of a first sidelink transmission by using a sidelink transmission corresponding to a maximum sidelink priority value among remaining sidelink transmissions in the time domain overlapping part as the first sidelink transmission, until a transmission power of sidelink transmissions in the time domain overlapping part is less than or equal to the first transmission power.

In some embodiments, the reducing the transmission power of the one or more sidelink transmissions among the plurality of sidelink transmissions in the time domain overlapping part includes: if a quantity of sidelink transmissions whose transmission power are to be reduced is M, reducing transmission power of the M sidelink transmissions at an equal proportion, where M is a positive integer greater than 1.

In some embodiments, the adjustment unit 1710 is specifically configured to: in a case that the sidelink transmission whose transmission power is to be adjusted comprises N PSFCHs, adjust transmission power of the N PSFCHs according to sidelink priorities corresponding to the N PSFCHs, wherein N is a positive integer greater than or equal to 1.

In some embodiments, adjusting the transmission power of the N PSFCHs according to the sidelink priorities corresponding to the N PSFCHs includes: reducing a transmission power of a first PSFCH, wherein the first PSFCH is a PSFCH corresponding to a highest sidelink priority value among the N PSFCHs; and in a case that the transmission power of the first PSFCH is reduced to 0, if a transmission power of remaining sidelink transmissions in the time domain overlapping part is greater than the first transmission power, repeatedly performing a step of reducing a transmission power of a first PSFCH by using a PSFCH corresponding to a highest sidelink priority value among remaining PSFCHs as the first PSFCH, until a transmission power of sidelink transmissions in the time domain overlapping part is less than or equal to the first transmission power.

In some embodiments, the adjustment unit 1710 is specifically configured to: if the sidelink transmission whose transmission power is to be adjusted comprises N PSFCHs, reduce transmission power of the N PSFCHs at an equal proportion, wherein N is a positive integer greater than or equal to 1.

In some embodiments, the one or more sidelink transmissions of the terminal device on the first carrier overlapping in time domain with the one or more sidelink transmissions of the terminal device on the second carrier comprises: time domain resources of the one or more sidelink transmissions of the terminal device on the first carrier overlapping in a first time range with time domain resources of the one or more sidelink transmissions of the terminal device on the second carrier.

In some embodiments, the first time range includes one or more of the following: a time range corresponding to one or more timeslots; or a time range corresponding to one or more symbols.

In some embodiments, the first time range is determined based on a subcarrier spacing corresponding to the first carrier and/or a subcarrier spacing corresponding to the second carrier.

In some embodiments, the first time range is determined based on a minimum value among subcarrier spacings corresponding to the first carrier and the second carrier; or the first time range is determined based on a maximum value among subcarrier spacings corresponding to the first carrier and the second carrier.

In some embodiments, the second carrier includes one or more carriers.

In some embodiments, the one or more sidelink transmissions on the second carrier are sidelink transmissions on a same carrier; or the one or more sidelink transmissions on the second carrier are sidelink transmissions on different carriers.

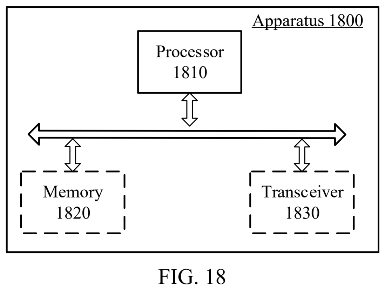

In an optional embodiment, the adjustment unit 1710 may be a processor 1810. The terminal device 1700 may further include a memory 1820 and a transceiver 1830, which are specifically shown in FIG. 18.

FIG. 18 is a schematic structural diagram of a communication apparatus according to an embodiment of this application. The dotted line in FIG. 18 indicates that the unit or module is optional. The apparatus 1800 may be configured to implement the method described in the foregoing method embodiments. The apparatus 1800 may be a chip or a terminal device.

The apparatus 1800 may include one or more processors 1810. The processor 1810 may support the apparatus 1800 to implement the method described in the foregoing method embodiments. The processor 1810 may be a general-purpose processor or a dedicated processor. For example, the processor may be a central processing unit (central processing unit, CPU). Alternatively, the processor may be other general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, and the program may be executed by the processor 1810, so that the processor 1810 executes the method described in the foregoing method embodiments. The memory 1820 may be independent of or integrated into the processor 1810.

The apparatus 1800 may further include a transceiver 1830. The processor 1810 may communicate with another device or chip by using the transceiver 1830. For example, the processor 1810 may perform data reception and transmission with another device or chip by using the transceiver 1830.

An embodiment of this application further provides a computer-readable storage medium, configured to store a program. The computer readable storage medium may be applied to the terminal provided in the embodiments of this application, and the program causes the computer to execute the method executed by the terminal in the embodiments of this application.

An embodiment of this application further provides a computer program product. The computer program product includes a program. The computer program product may be applied to the terminal provided in the embodiments of this application, and the program causes the computer to execute the method executed by the terminal in the embodiments of this application.

An embodiment of this application further provides a computer program. The computer program may be applied to the terminal provided in the embodiments of this application, and the computer program causes the computer to execute the method executed by the terminal in the embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In this embodiment of this application, "predefined" or "pre-configured" may be implemented in a manner in which a corresponding code, table, or other related information may be pre-stored in a device (for example, includes a terminal device). A specific implementation manner of this application is not limited. For example, being pre-defined may refer to being defined in a protocol. The pre-configuration may be configured when the device is delivered from the factory.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In this embodiment of this application, the "includes" may be directly included, or may be indirectly included. Optionally, "include" mentioned in this embodiment of this application may be replaced with "indicate" or "used for determining". For example, A includes B, which may be replaced with A indicate B, or A is used to determine B.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

Some or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

**Claims**

1. A sidelink communication method, comprising:

   adjusting, by a terminal device, a transmission power of a sidelink transmission when a first condition is met; wherein the first condition comprises one or more of following:

   one or more sidelink transmissions of the terminal device on a first carrier overlap in time domain with one or more sidelink transmissions of the terminal device on a second carrier; or
   a sum of transmission power of a plurality of sidelink transmissions in a time domain overlapping part of the first carrier and the second carrier is greater than a first transmission power.

2. The method according to claim 1, wherein the first transmission power is determined based on one or more of following:

   a maximum transmission power of the terminal device;
   a configured maximum output power of a resource pool on the first carrier;
   a configured maximum transmission power of a resource pool on the first carrier;
   a configured maximum output power of a resource pool on the second carrier; or
   a configured maximum transmission power of a resource pool on the second carrier.

3. The method according to claim 1 or 2, wherein the first transmission power is greater than or equal to a first threshold; and/or the first transmission power is less than or equal to a second threshold.

4. The method according to claim 3, wherein the first threshold and/or the second threshold are determined based on one or more of following:

   a second transmission power, determined based on a first parameter configured for a resource pool on the first carrier and/or the second carrier;
   a third transmission power, determined based on a power class and/or a power reduction parameter of the terminal device; or
   a fourth transmission power, determined based on regulations;
   wherein the first parameter is used to indicate a maximum value of sidelink transmission power of the terminal device on the resource pool.

5. The method according to claim 4, wherein the second transmission power is determined based on a sum of linear values corresponding to first parameters configured for resource pools on the first carrier and the second carrier.

6. The method according to claim 4 or 5, wherein if the one or more sidelink transmissions on the first carrier or the one or more sidelink transmissions on the second carrier comprise PSSCH and/or PSCCH, the first parameter configured for the resource pool on the first carrier and/or the second carrier comprises the first parameter configured for a resource pool in which the PSSCH and/or the PSCCH are located.

7. The method according to any one of claims 4 to 6, wherein if the one or more sidelink transmissions on the first carrier and the one or more sidelink transmissions on the second carrier comprise a PSFCH, the first parameter configured for the resource pool on the first carrier and/or the second carrier comprises first parameters respectively configured for one or more resource pools in which the PSFCH is located.

8. The method according to any one of claims 4 to 7, wherein if the one or more sidelink transmissions on the first carrier and the one or more sidelink transmissions on the second carrier comprise one or more of a PSCCH, a PSSCH, or a PSFCH, the first threshold and/or the second threshold are determined based on a minimum value among the second transmission power, the third transmission power and the fourth transmission power.

9. The method according to claim 8, wherein

   the first threshold meets: $\text{MIN} \{10 \log_{10} P_{temp}, P_{PowerClass} - \text{MAX}(\text{MAX}(MPR, A\text{-}MPR) + \Delta T_{IB}, P\text{-}MPR), P_{Regulatory}\}$;
   the second threshold meets: $\text{MIN}\{10 \log_{10} P_{temp}, P_{PowerClass}, P_{Regulatory}\}$;

wherein $10 \log_{10} P_{temp}$ represents the second transmission power, $P_{PowerClass}$ represents a power determined based on the power class of the terminal device, MPR represents a maximum power reduction, A-MPR represents an additional maximum power reduction, $\Delta T_{IB}$ represents an additional tolerance, P-MPR represents a power management maximum power reduction, and $P_{Regulatory}$ represents the fourth transmission power.

10. The method according to claim 4, wherein if the one or more sidelink transmissions on the first carrier and the one or more sidelink transmissions on the second carrier comprise an SSB, the first threshold and/or the second threshold are determined based on a minimum value among the third power and the fourth power.

11. The method according to claim 10, wherein

the first threshold meets: MIN $\{P_{PowerClass} - MAX(MAX(MPR, A\text{-}MPR) + \Delta T_{IB}, P\text{-}MPR), P_{Regulatory}\}$;
the second threshold meets: MIN $\{P_{PowerClass}, P_{Regulatory}\}$;
wherein $P_{PowerClass}$ represents a power determined based on the power class of the terminal device, MPR represents a maximum power reduction, A-MPR represents an additional maximum power reduction, $\Delta T_{IB}$ represents an additional tolerance, P-MPR represents a power management maximum power reduction, and $P_{Regulatory}$ represents the fourth transmission power.

12. The method according to any one of claims 4 to 11, wherein the power reduction parameter comprises one or more of following:

a maximum power reduction;
an additional maximum power reduction; or
a power management maximum power reduction.

13. The method according to any one of claims 1 to 12, wherein the sum of the transmission power of the plurality of sidelink transmissions in the time domain overlapping part is determined based on a maximum value of the sum of the transmission power of the plurality of sidelink transmissions in the time domain overlapping part.

14. The method according to any one of claims 1 to 13, wherein the adjusting, by the terminal device, the transmission power of the sidelink transmission comprises:
adjusting, by the terminal device, the transmission power of the sidelink transmission according to sidelink priorities corresponding to the one or more sidelink transmissions on the first carrier and/or sidelink priorities corresponding to the one or more sidelink transmissions on the second carrier.

15. The method according to claim 14, wherein the adjusting, by the terminal device, the transmission power of the sidelink transmission according to the sidelink priorities corresponding to the one or more sidelink transmissions on the first carrier and/or the sidelink priorities corresponding to the one or more sidelink transmissions on the second carrier comprises:

adjusting, by the terminal device, the transmission power of the sidelink transmission according to a relationship between a first value and a second value;
wherein the first value is determined according to a minimum value among sidelink priority values corresponding to the one or more sidelink transmissions on the first carrier, and the second value is determined according to a minimum value among sidelink priority values corresponding to the one or more sidelink transmissions on the second carrier.

16. The method according to claim 15, wherein the adjusting, by the terminal device, the transmission power of the sidelink transmission according to the relationship between the first value and the second value comprises one of following:

if the first value is less than the second value, reducing, by the terminal device, transmission power of the one or more sidelink transmissions on the second carrier;
if the first value is less than or equal to the second value, reducing, by the terminal device, transmission power of the one or more sidelink transmissions on the second carrier;
if the first value is greater than the second value, reducing, by the terminal device, transmission power of the one or more sidelink transmissions on the first carrier; or
if the first value is greater than or equal to the second value, reducing, by the terminal device, transmission power of the one or more sidelink transmissions on the first carrier.

17. The method according to claim 14, wherein the second carrier comprises a plurality of carriers, and the adjusting, by the terminal device, the transmission power of the sidelink transmission according to the sidelink priorities corresponding to the one or more sidelink transmissions on the first carrier and/or the sidelink priorities corresponding to the one or more sidelink transmissions on the second carrier comprises:

reducing, by the terminal device, transmission power of one or more sidelink transmissions in the time domain overlapping part on a target carrier, wherein the target carrier is a carrier with a highest priority value among the first carrier and the plurality of carriers, and each of priority values associated with the first carrier and the plurality of carriers is determined according to a minimum value among sidelink priority values corresponding to one or more sidelink transmissions on a respective carrier; and
in a case in which the transmission power of the one or more sidelink transmissions in the time domain overlapping part on the target carrier are reduced to 0, if a transmission power of sidelink transmissions in the time domain overlapping part on remaining carriers is greater than the first transmission power, repeatedly performing, by the terminal device, a step of reducing transmission power of one or more sidelink transmissions in the time domain overlapping part on a target carrier by using a carrier with a highest priority value among remaining carriers as the target carrier until a transmission power of sidelink transmissions in the time domain overlapping part is less than or equal to the first transmission power.

18. The method according to any one of claims 1 to 17, wherein the adjusting, by the terminal device, the transmission power of the sidelink transmission comprises:
reducing, by the terminal device, transmission power of one or more sidelink transmissions among the plurality of sidelink transmissions in the time domain overlapping part, to make a transmission power of sidelink transmissions in the time domain overlapping part is less than or equal to the first transmission power.

19. The method according to claim 18, wherein the reducing, by the terminal device, the transmission power of the one or more sidelink transmissions among the plurality of sidelink transmissions in the time domain overlapping part comprises:

reducing, by the terminal device, a transmission power of a first sidelink transmission, wherein the first sidelink transmission is a sidelink transmission corresponding to a maximum sidelink priority value among the sidelink transmissions in the time domain overlapping part; and
in a case in which the transmission power of the first sidelink transmission is reduced to 0, if a transmission power of remaining sidelink transmissions in the time domain overlapping part is greater than the first transmission power, repeatedly performing, by the terminal device, a step of reducing a transmission power of a first sidelink transmission by using a sidelink transmission corresponding to a maximum sidelink priority value among remaining sidelink transmissions in the time domain overlapping part as the first sidelink transmission, until a transmission power of sidelink transmissions in the time domain overlapping part is less than or equal to the first transmission power.

20. The method according to claim 18, wherein the reducing, by the terminal device, the transmission power of the one or more sidelink transmissions among the plurality of sidelink transmissions in the time domain overlapping part comprises:

if a quantity of sidelink transmissions whose transmission power are to be reduced is M, reducing, by the terminal device, transmission power of the M sidelink transmissions at an equal proportion,
wherein M is a positive integer greater than 1.

21. The method according to any one of claims 1 to 20, wherein the adjusting, by the terminal device, the transmission power of the sidelink transmission comprises:

in a case that the sidelink transmission whose transmission power is to be adjusted comprises N PSFCHs, adjusting, by the terminal device, transmission power of the N PSFCHs according to sidelink priorities corresponding to the N PSFCHs,
wherein N is a positive integer greater than or equal to 1.

22. The method according to claim 21, wherein the adjusting, by the terminal device, the transmission power of the N PSFCHs according to the sidelink priorities corresponding to the N PSFCHs comprises:

> reducing, by the terminal device, a transmission power of a first PSFCH, wherein the first PSFCH is a PSFCH corresponding to a highest sidelink priority value among the N PSFCHs; and
> in a case that the transmission power of the first PSFCH is reduced to 0, if a transmission power of remaining sidelink transmissions in the time domain overlapping part is greater than the first transmission power, repeatedly performing, by the terminal device, a step of reducing a transmission power of a first PSFCH by using a PSFCH corresponding to a highest sidelink priority value among remaining PSFCHs as the first PSFCH, until a transmission power of sidelink transmissions in the time domain overlapping part is less than or equal to the first transmission power.

23. The method according to any one of claims 1 to 22, wherein the adjusting, by the terminal device, the transmission power of the sidelink transmission comprises:

> if the sidelink transmission whose transmission power is to be adjusted comprises N PSFCHs, reducing, by the terminal device, transmission power of the N PSFCHs at an equal proportion,
> wherein N is a positive integer greater than or equal to 1.

24. The method according to any one of claims 1 to 23, wherein the one or more sidelink transmissions of the terminal device on the first carrier overlapping in time domain with the one or more sidelink transmissions of the terminal device on the second carrier comprises: time domain resources of the one or more sidelink transmissions of the terminal device on the first carrier overlapping in a first time range with time domain resources of the one or more sidelink transmissions of the terminal device on the second carrier.

25. The method according to claim 24, wherein the first time range comprises one or more of the following:

> a time range corresponding to one or more timeslots; or
> a time range corresponding to one or more symbols.

26. The method according to claim 24 or 25, wherein the first time range is determined based on a subcarrier spacing corresponding to the first carrier and/or a subcarrier spacing corresponding to the second carrier.

27. The method according to claim 26, wherein

> the first time range is determined based on a minimum value among subcarrier spacings corresponding to the first carrier and the second carrier; or
> the first time range is determined based on a maximum value among subcarrier spacings corresponding to the first carrier and the second carrier.

28. The method according to any one of claims 1 to 27, wherein the second carrier comprises one or more carriers.

29. The method according to any one of claims 1 to 28, wherein

> the one or more sidelink transmissions on the second carrier are sidelink transmissions on a same carrier; or
> the one or more sidelink transmissions on the second carrier are sidelink transmissions on different carriers.

30. A terminal device, comprising:

> an adjustment unit, configured to adjust a transmission power of a sidelink transmission when a first condition is met;
> wherein the first condition comprises one or more of following:
>
> > one or more sidelink transmissions of the terminal device on a first carrier overlap in time domain with one or more sidelink transmissions of the terminal device on a second carrier; or
> > a sum of transmission power of a plurality of sidelink transmissions in a time domain overlapping part of the first carrier and the second carrier is greater than a first transmission power.

31. The terminal device according to claim 30, wherein the first transmission power is determined based on one or more of following:

a maximum transmission power of the terminal device;
a configured maximum output power of a resource pool on the first carrier;
a configured maximum transmission power of a resource pool on the first carrier;
a configured maximum output power of a resource pool on the second carrier; or
a configured maximum transmission power of a resource pool on the second carrier.

32. The terminal device according to claim 30 or 31, wherein the first transmission power is greater than or equal to a first threshold; and/or the first transmission power is less than or equal to a second threshold.

33. The terminal device according to claim 32, wherein the first threshold and/or the second threshold are determined based on one or more of following:

a second transmission power, determined based on a first parameter configured for a resource pool on the first carrier and/or the second carrier;
a third transmission power, determined based on a power class and/or a power reduction parameter of the terminal device; or
a fourth transmission power, determined based on regulations;
wherein the first parameter is used to indicate a maximum value of sidelink transmission power of the terminal device on the resource pool.

34. The terminal device according to claim 33, wherein the second transmission power is determined based on a sum of linear values corresponding to first parameters configured for resource pools on the first carrier and the second carrier.

35. The terminal device according to claim 33 or 34, wherein if the one or more sidelink transmissions on the first carrier or the one or more sidelink transmissions on the second carrier comprise PSSCH and/or PSCCH, the first parameter configured for the resource pool on the first carrier and/or the second carrier comprises the first parameter configured for a resource pool in which the PSSCH and/or the PSCCH are located.

36. The terminal device according to any one of claims 33 to 35, wherein if the one or more sidelink transmissions on the first carrier and the one or more sidelink transmissions on the second carrier comprise a PSFCH, the first parameter configured for the resource pool on the first carrier and/or the second carrier comprises first parameters respectively configured for one or more resource pools in which the PSFCH is located.

37. The terminal device according to any one of claims 33 to 36, wherein if the one or more sidelink transmissions on the first carrier and the one or more sidelink transmissions on the second carrier comprise one or more of a PSCCH, a PSSCH, or a PSFCH, the first threshold and/or the second threshold are determined based on a minimum value among the second transmission power, the third transmission power and the fourth transmission power.

38. The terminal device according to claim 37, wherein

the first threshold meets: $\text{MIN} \{10 \log_{10} P_{temp}, P_{PowerClass} - \text{MAX}(\text{MAX}(MPR, A\text{-}MPR) + \Delta T_{IB}, P\text{-}MPR), P_{Regulatory}\}$;
the second threshold meets: $\text{MIN}\{10 \log_{10} P_{temp}, P_{PowerClass}, P_{Regulatory}\}$;
wherein $10 \log_{10} P_{temp}$ represents the second transmission power, $P_{PowerClass}$ represents a power determined based on the power class of the terminal device, MPR represents a maximum power reduction, A-MPR represents an additional maximum power reduction, $\Delta T_{IB}$ represents an additional tolerance, P-MPR represents a power management maximum power reduction, and $P_{Regulatory}$ represents the fourth transmission power.

39. The terminal device according to claim 33, wherein if the one or more sidelink transmissions on the first carrier and the one or more sidelink transmissions on the second carrier comprise an SSB, the first threshold and/or the second threshold are determined based on a minimum value among the third power and the fourth power.

40. The terminal device according to claim 39, wherein

the first threshold meets: $\text{MIN} \{P_{PowerClass} - \text{MAX}(\text{MAX}(MPR, A\text{-}MPR) + \Delta T_{IB}, P\text{-}MPR), P_{Regulatory}\}$;
the second threshold meets: $\text{MIN} \{P_{PowerClass}, P_{Regulatory}\}$;

wherein $P_{PowerClass}$ represents a power determined based on the power class of the terminal device, MPR represents a maximum power reduction, A-MPR represents an additional maximum power reduction, $\Delta T_{IB}$ represents an additional tolerance, P-MPR represents a power management maximum power reduction, and $P_{Regulatory}$ represents the fourth transmission power.

41. The terminal device according to any one of claims 33 to 40, wherein the power reduction parameter comprises one or more of following:

   a maximum power reduction;
   an additional maximum power reduction; or
   a power management maximum power reduction.

42. The terminal device according to any one of claims 30 to 41, wherein the sum of the transmission power of the plurality of sidelink transmissions in the time domain overlapping part is determined based on a maximum value of the sum of the transmission power of the plurality of sidelink transmissions in the time domain overlapping part.

43. The terminal device according to any one of claims 30 to 42, wherein the adjustment unit is specifically configured to: adjust the transmission power of the sidelink transmission according to sidelink priorities corresponding to the one or more sidelink transmissions on the first carrier and/or sidelink priorities corresponding to the one or more sidelink transmissions on the second carrier.

44. The terminal device according to claim 43, wherein adjusting the transmission power of the sidelink transmission according to the sidelink priorities corresponding to the one or more sidelink transmissions on the first carrier and/or the sidelink priorities corresponding to the one or more sidelink transmissions on the second carrier comprises:

   adjusting the transmission power of the sidelink transmission according to a relationship between a first value and a second value;
   wherein the first value is determined according to a minimum value among sidelink priority values corresponding to the one or more sidelink transmissions on the first carrier, and the second value is determined according to a minimum value among sidelink priority values corresponding to the one or more sidelink transmissions on the second carrier.

45. The terminal device according to claim 44, wherein adjusting the transmission power of the sidelink transmission according to the relationship between the first value and the second value comprises one of following:

   if the first value is less than the second value, reducing transmission power of the one or more sidelink transmissions on the second carrier;
   if the first value is less than or equal to the second value, reducing transmission power of the one or more sidelink transmissions on the second carrier;
   if the first value is greater than the second value, reducing transmission power of the one or more sidelink transmissions on the first carrier; or
   if the first value is greater than or equal to the second value, reducing transmission power of the one or more sidelink transmissions on the first carrier.

46. The terminal device according to claim 43, wherein the second carrier comprises a plurality of carriers, and adjusting the transmission power of the sidelink transmission according to the sidelink priorities corresponding to the one or more sidelink transmissions on the first carrier and/or the sidelink priorities corresponding to the one or more sidelink transmissions on the second carrier comprises:

   reducing transmission power of one or more sidelink transmissions in the time domain overlapping part on a target carrier, wherein the target carrier is a carrier with a highest priority value among the first carrier and the plurality of carriers, and each of priority values associated with the first carrier and the plurality of carriers is determined according to a minimum value among sidelink priority values corresponding to one or more sidelink transmissions on a respective carrier; and
   in a case in which the transmission power of the one or more sidelink transmissions in the time domain overlapping part on the target carrier are reduced to 0, if a transmission power of sidelink transmissions in the time domain overlapping part on remaining carriers is greater than the first transmission power, repeatedly performing a step of reducing transmission power of one or more sidelink transmissions in the time domain overlapping part on a target carrier by using a carrier with a highest priority value among remaining carriers as the target carrier until a transmission power of sidelink transmissions in the time domain overlapping part is less than or equal to the first transmission power.

47. The terminal device according to any one of claims 30 to 46, wherein the adjustment unit is specifically configured to: reduce transmission power of one or more sidelink transmissions among the plurality of sidelink transmissions in the time domain overlapping part, to make a transmission power of sidelink transmissions in the time domain overlapping part is less than or equal to the first transmission power.

48. The terminal device according to claim 47, wherein reducing the transmission power of the one or more sidelink transmissions among the plurality of sidelink transmissions in the time domain overlapping part comprises:

reducing a transmission power of a first sidelink transmission, wherein the first sidelink transmission is a sidelink transmission corresponding to a maximum sidelink priority value among the sidelink transmissions in the time domain overlapping part; and
in a case in which the transmission power of the first sidelink transmission is reduced to 0, if a transmission power of remaining sidelink transmissions in the time domain overlapping part is greater than the first transmission power, repeatedly performing a step of reducing a transmission power of a first sidelink transmission by using a sidelink transmission corresponding to a maximum sidelink priority value among remaining sidelink transmissions in the time domain overlapping part as the first sidelink transmission, until a transmission power of sidelink transmissions in the time domain overlapping part is less than or equal to the first transmission power.

49. The terminal device according to claim 47, wherein reducing the transmission power of the one or more sidelink transmissions among the plurality of sidelink transmissions in the time domain overlapping part comprises:

if a quantity of sidelink transmissions whose transmission power are to be reduced is M, reducing transmission power of the M sidelink transmissions at an equal proportion,
wherein M is a positive integer greater than 1.

50. The terminal device according to any one of claims 30 to 49, wherein the adjustment unit is specifically configured to:

in a case that the sidelink transmission whose transmission power is to be adjusted comprises N PSFCHs, adjust transmission power of the N PSFCHs according to sidelink priorities corresponding to the N PSFCHs,
wherein N is a positive integer greater than or equal to 1.

51. The terminal device according to claim 50, wherein adjusting the transmission power of the N PSFCHs according to the sidelink priorities corresponding to the N PSFCHs comprises:

reducing a transmission power of a first PSFCH, wherein the first PSFCH is a PSFCH corresponding to a highest sidelink priority value among the N PSFCHs; and
in a case that the transmission power of the first PSFCH is reduced to 0, if a transmission power of remaining sidelink transmissions in the time domain overlapping part is greater than the first transmission power, repeatedly performing a step of reducing a transmission power of a first PSFCH by using a PSFCH corresponding to a highest sidelink priority value among remaining PSFCHs as the first PSFCH, until a transmission power of sidelink transmissions in the time domain overlapping part is less than or equal to the first transmission power.

52. The terminal device according to any one of claims 30 to 51, wherein the adjustment unit is specifically configured to:

if the sidelink transmission whose transmission power is to be adjusted comprises N PSFCHs, reduce transmission power of the N PSFCHs at an equal proportion,
wherein N is a positive integer greater than or equal to 1.

53. The terminal device according to any one of claims 30 to 52, wherein the one or more sidelink transmissions of the terminal device on the first carrier overlapping in time domain with the one or more sidelink transmissions of the terminal device on the second carrier comprises: time domain resources of the one or more sidelink transmissions of the terminal device on the first carrier overlapping in a first time range with time domain resources of the one or more sidelink transmissions of the terminal device on the second carrier.

54. The terminal device according to claim 53, wherein the first time range comprises one or more of the following:

   a time range corresponding to one or more timeslots; or
   a time range corresponding to one or more symbols.

55. The terminal device according to claim 53 or 54, wherein the first time range is determined based on a subcarrier spacing corresponding to the first carrier and/or a subcarrier spacing corresponding to the second carrier.

56. The terminal device according to claim 55, wherein

   the first time range is determined based on a minimum value among subcarrier spacings corresponding to the first carrier and the second carrier; or
   the first time range is determined based on a maximum value among subcarrier spacings corresponding to the first carrier and the second carrier.

57. The terminal device according to any one of claims 30 to 56, wherein the second carrier comprises one or more carriers.

58. The terminal device according to any one of claims 30 to 57, wherein

   the one or more sidelink transmissions on the second carrier are sidelink transmissions on a same carrier; or
   the one or more sidelink transmissions on the second carrier are sidelink transmissions on different carriers.

59. A terminal device, comprising a memory and a processor, wherein the memory is configured to store a program, and the processor is configured to invoke the program in the memory, to cause the terminal device to execute the method according to any one of claims 1 to 29.

60. An apparatus, comprising a processor, configured to invoke a program from a memory, to cause the apparatus to execute the method according to any one of claims 1 to 29.

61. A chip, comprising a processor, configured to invoke a program from a memory, so that a device installed with the chip performs the method according to any one of claims 1 to 29.

62. A computer readable storage medium, storing a program, wherein the program causes a computer to execute the method according to any one of claims 1 to 29.

63. A computer program product, comprising a program, wherein the program causes a computer to execute the method according to any one of claims 1 to 29.

64. A computer program, wherein the computer program causes a computer to execute the method according to any one of claims 1 to 29.

FIG. 1

FIG. 2

FIG. 3

FIG. 4

FIG. 5

FIG. 6

Terminal device 1                    Terminal device 2

Sidelink data

**FIG. 7**

Communication group

Terminal device 2

Terminal device 1

Terminal device 3

Terminal device 4

**FIG. 8**

FIG. 9A

FIG. 9B

Adjust, by a terminal device, a transmit
power of a sidelink transmission when
a first condition is met — S1010

FIG. 10

Carrier 0
15kHz

Carrier 1
15kHz

Carrier 2
30kHz

Carrier 3
30kHz

Carrier 4
30kHz

Carrier 5
30kHz

PSCCH/PSSCH    PSFCH    GP

FIG. 11

Carrier 1
15kHz

PSSCH1    PSFCH

Carrier 2
30kHz

PSSCH2    PSSCH3

PSCCH/PSSCH    PSFCH    GP

FIG. 12

FIG. 13

FIG. 14

Carrier 3
30kHz

PSSCH5

PSF
CH

Carrier 4
30kHz

PSSCH6

PSCCH/PSSCH          PSFCH          GP

FIG.15

Carrier 0
30kHz

Carrier 1
30kHz

PSCCH/PSSCH          PSFCH          GP

FIG. 16

Terminal device 1700

Adjustment unit
1710

FIG. 17

FIG. 18

**EP 4 723 783 A1**

## INTERNATIONAL SEARCH REPORT

| International application No. |
|---|
| **PCT/CN2023/110771** |

| | |
|---|---|
| **A.** | **CLASSIFICATION OF SUBJECT MATTER** |
| | H04W72/40(2023.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN: 侧行, 传输, 调整, 多载波, 发射, 发送, 改变, 功率, 交叠, 时域, 数据包重复, 载波聚合, 直连, 重叠, aggregation, CA, carrier, domain, duplication, packet, power, sidelink, SL, time, interweav+, overlap+, adjust+, multi? carrier, chang+, send+, transmi+

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2023115488 A1 (GUANGDONG OPPO MOBILE TELECOMMUNICATIONS CORP., LTD.) 29 June 2023 (2023-06-29)<br>description, pages 3-18, and figures 1-21 | 1-64 |
| A | CN 113711628 A (GUANGDONG OPPO MOBILE COMMUNICATIONS CO., LTD.) 26 November 2021 (2021-11-26)<br>entire document | 1-64 |
| A | NOKIA et al. "On Co-channel Coexistence for LTE Sidelink and NR Sidelink"<br>*3GPP TSG RAN WG1 #112, R1-2300038*, 03 March 2023 (2023-03-03),<br>entire document | 1-64 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 April 2024** | **19 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/110771**

| Patent document cited in search report | | | Publication date (day/month/year) | Patent family member(s) | | | Publication date (day/month/year) |
|---|---|---|---|---|---|---|---|
| WO | 2023115488 | A1 | 29 June 2023 | None | | | |
| CN | 113711628 | A | 26 November 2021 | WO | 2020210961 | A1 | 22 October 2020 |
| | | | | US | 2022039118 | A1 | 03 February 2022 |

Form PCT/ISA/210 (patent family annex) (July 2022)